# EUROPEAN PATENT APPLICATION

(11) **EP 4 631 723 A1**
(43) Date of publication of application: **15.10.2025**
(21) Application number: 23900432.8
(22) Date of filing: 17.11.2023
(51) Int. Cl.: B32B 27/00, B32B 27/18, B32B 27/32, H01M 4/66

(54) **LAMINATE FILM, LAMINATE FILM MANUFACTURING METHOD, CONDUCTIVE FILM, CURRENT COLLECTOR, AND BATTERY**

(30) Priority: 06.12.2022 JP 2022194880; 30.03.2023 JP 2023054849; 30.03.2023 JP 2023054852
(71) Applicant: Mitsubishi Chemical Corporation, Tokyo 100-8251 (JP)
(72) Inventor: NISHIOKA, Jun, Tokyo 100-8251 (JP); KITA, Serina, Tokyo 100-8251 (JP)
(74) Representative: Vossius & Partner Patentanwälte Rechtsanwälte mbB
(86) International application number: PCT/JP2023/041396
(87) International publication number: WO 2024/122311

(57) **Abstract**

A laminate film comprising an intermediate layer [I] comprising a resin composition (A) containing a thermoplastic resin (a1) and a conductive filler (a2), and both outer layers [II] comprising a resin composition (B) containing a thermoplastic resin (b1), wherein a thickness (X) of the intermediate layer [I] is 1 µm or more and 100 µm or less, a ratio of a thickness (Y) of the both outer layers [II] to the thickness (X) of the intermediate layer [I] (Y/X) is 1 or more and 5 or less, a thickness variation of the intermediate layer [I] is less than ±10 µm, and a peeling strength between the intermediate layer [I] and the both outer layers [II] is less than 0.1 N/cm.

## Description

### Technical Field

The present invention relates to a laminate film, a method for producing a laminate film, a conductive film, a current collector, and a battery.

### Background Art

In the field of electronics, key properties required for polymer materials vary depending on products and uses, and include moldability, heat resistance, durability, high strength, chemical resistance, and corrosion resistance. Examples of the resin meeting these requirements include thermoplastic resins such as polypropylene, polycarbonate and polyimide, and thermosetting resins such as epoxy resins and phenol resins.

Methods are known in which a conductive material is added to a polymer material for imparting conductivity to the polymer material. However, the obtainment of a highly conductive film having a volume resistivity of 10⁴ Ω·cm or less requires addition of a large amount of the conductive material to the polymer material, which may deteriorate extrudability. To address this, many studies have been conducted and reported.

For example, Patent Literature 1 discloses a method for producing a highly conductive film, comprising providing a highly conductive thermoplastic resin composition layer having 30 parts by weight or more of a carbon-based filler as an intermediate layer, forming peelable thermoplastic resin layers as outer layers on both surfaces of the intermediate layer by co-extrusion such that a force needed to peel the outer layer in a 180° direction with respect to the intermediate layer is 5 to 500 g/15 mm in width, performing cooling, and then peeling the thermoplastic resin layers on the both surfaces.

Patent Literature 2 discloses a method for producing a highly conductive film, comprising forming, by a co-extrusion method, a multi-layered film comprising an intermediate layer composed of a conductive resin composition obtained by blending a conductive filler in a thermoplastic resin (A), and a thermoplastic resin (B) that is disposed as both outer layers on the intermediate layer and that has a good peeling property with respect to the thermoplastic resin (A), cooling the multi-layered film, and then peeling the both outer layers, wherein a ratio of a draft ratio D and a lip gap L, D/L, in co-extrusion is 11 or less.

Patent Literature 3 discloses a laminate film comprising an intermediate layer comprising a resin composition (I) containing a conductive filler (A) and a thermoplastic resin (B), and both outer layers comprising a resin composition (II) containing a thermoplastic resin (C), wherein a ratio of a melt flow rate of the resin composition (I) (MFR (I)) and a melt flow rate of the resin composition (II) (MFR (II)) [MFR (I)/MFR (II)] is 0.1 or more and 3.5 or less, an average value of the first normal stress differences of the resin composition (I) is - 0.015 MPa or more at a temperature of 240°C and a shear rate of 10 to 100 sec⁻¹, and a thickness of the intermediate layer is 50 µm or less.

### Citation List

### Patent Literature

PTL1: JP 61-82611 A
PTL2: JP 2014-030899 A
PTL3: JP 2020-157651 A

### Summary of Invention

### Technical problem

Examples of the method for producing a laminate film include a method in which with an extrusion molding machine, an intermediate layer resin composition and an outer layer resin composition are respectively put in hoppers of an extruder, melted and plasticized at a predetermined temperature, co-extruded under predetermined film formation conditions from a lip gap being a discharge outlet of a T-die, guided to a casting roll at a predetermined temperature, and then solidified by cooling to obtain a laminate film.

Recently, the reduced size and the reduced thickness of electronic components have raised the required level of reduction of the weight and reduction of the thickness of a conductive film used as a part of the electronic component. Therefore, a desired intermediate layer having a thickness of 100 µm or less is so thin that in production of a laminate film, an intermediate layer resin composition extruded from a discharge outlet of a T-die is easily affected by members around the discharge outlet which it contacts. This results in an increased thickness variation of the intermediate layer, so that there are, for example, a problem that the intermediate layer has a poor appearance with, for example, flow marks and holes, and a problem that a stick-slip (getting stuck) occurs as peeling of outer layers does not stabilize when the outer layers are peeled from the laminate film.

The methods for producing a conductive film, which are disclosed in Patent Literatures 1 and 2, are designed to provide a film having higher conductivity. However, Patent Literatures 1 and 2 do not specifically indicate that a laminate film is obtained in which a desired intermediate layer is a film as thin as 100 µm or less, but has little thickness variation and a good appearance, and the laminate film has an excellent peeling property between the intermediate layer and both outer layers. There has been room for further studies.

Normally, the peeling strength in peeling of the outer layer from the laminate film is determined so as to suppress the problem that the outer layers peel from the intermediate layer during winding of the laminate film, and to prevent peeling failures such as attachment of a part of the outer layer to the intermediate layer in peeling of the outer layer from the laminate film. For example, Patent Literature 3 discloses a laminate film in which the peeling strength between the intermediate layer and the both outer layers is 0.1 N/cm or more and 1.4 N/cm or less.

Recently, from the viewpoint of improving the surface quality of conductive films, and improving the productivity of conductive films, current collectors comprising a conductive film, and batteries comprising a conductive film, it has been required to peel the outer layer from the intermediate layer smoothly and speedily, that is, to further reduce the peeling strength between the intermediate layer and the both outer layers.

Recently, attempts have been made to use a conductive film for a negative electrode current collector, where a negative electrode coating material (a negative electrode aqueous coating material obtained by mixing a negative electrode active material, a binder and an aqueous solvent) is applied to a surface of the negative electrode current collector to form a negative electrode layer thereon, thereby preparing a battery. In formation of the negative electrode layer, it is required to uniformly apply the negative electrode coating material (in particular, a negative electrode aqueous coating material) to a surface of the negative electrode current collector, but there is, for example, a problem that repelling of the negative electrode coating material by the surface of the negative electrode current collector, which causes unevenness, occurs, and thus the negative electrode coating material cannot be uniformly applied.

The methods for producing a highly conductive film, which are disclosed in Patent Literatures 1 and 2, and the laminate film comprising an intermediate layer that can become a conductive film, which is disclosed in Patent Literature 3, are designed to provide a film having higher conductivity. However, Patent Literatures 1 to 3 do not specifically indicate that when the conductive film is used for a negative electrode current collector, the negative electrode coating material is uniformly applied by, for example, modifying the surface properties of the negative electrode current collector. There has been room for further studies.

Accordingly, an object of a first aspect of the present invention is to provide a laminate film comprising an intermediate layer having little thickness variation, a good appearance and high conductivity, and having an excellent peeling property between the intermediate layer and both outer layers, although the intermediate layer is a film as thin as 100 µm or less.

Further, an object of a second aspect of the present invention is to provide a laminate film comprising an intermediate layer having little thickness variation, excellent coatability with an aqueous liquid, a good appearance and high conductivity, and having an excellent peeling property between the intermediate layer and both outer layers. Another object of the second aspect of the present invention is to provide a conductive film having little variation, excellent coatability with an aqueous liquid, a good appearance and high conductivity.

Further, an object of a third aspect of the present invention is to provide a laminate film comprising an intermediate layer having excellent coatability with an aqueous liquid, excellent mechanical properties such as excellent tensile elongation at break, little thickness variation, a good appearance and high conductivity, and having an excellent peeling property between the intermediate layer and both outer layers. Another object of the third aspect of the present invention is to provide a conductive film having excellent coatability with an aqueous liquid, excellent mechanical properties such as excellent tensile elongation at break, little thickness variation, a good appearance and high conductivity.

### Solution to Problem

Concerning the first aspect of the present invention, the present inventors have found that although the desired intermediate layer is a film as thin as 1 µm or more and 100 µm or less, the above-described object can be achieved by setting the ratio of the thickness (Y) of both outer layers to the thickness (X) of the intermediate layer (Y/X) within a specific range, setting the thickness variation of the intermediate layer below a specific range, and setting the peeling strength between the intermediate layer and both outer layers below a specific range.

Concerning the second aspect of the present invention, the present inventors have found that the above-described object can be achieved by setting the thickness variation of the intermediate layer below a specific range (less than ±10 µm) and setting the surface wetting index of at least one surface of the intermediate layer equal to or greater than a specific value (30 dyne/cm or more).

Concerning the third aspect of the present invention, the present inventors have found that the above-described object can be achieved by providing a layer formed by a plurality of layers as an intermediate layer [I] and setting the surface wetting index of at least one surface layer (i-1) of the intermediate layer equal to or greater than a specific value (30 dyne/cm or more).

That is, the present invention provides the following means.
<1> A laminate film comprising an intermediate layer [I] comprising a resin composition (A) containing a thermoplastic resin (a1) and a conductive filler (a2), and both outer layers [II] comprising a resin composition (B) containing a thermoplastic resin (b1),
   wherein a thickness (X) of the intermediate layer [I] is 1 µm or more and 100 µm or less,
   a ratio of a thickness (Y) of the both outer layers [II] to the thickness (X) of the intermediate layer [I] (Y/X) is 1 or more and 5 or less,
   a thickness variation of the intermediate layer [I] is less than ±10 µm, and
   a peeling strength between the intermediate layer [I] and the both outer layers[II] is less than 0.1 N/cm.
<2> The laminate film according to <1>, wherein the thermoplastic resin (a1) is a polyolefin-based resin.
<3> The laminate film according to <1> or <2>, wherein the conductive filler (a2) is at least one selected from the group consisting of a carbon nanotube and carbon black.
<4> The laminate film according to any one of <1> to <3>, wherein the thermoplastic resin (b1) is one or more selected from the group consisting of a polyester-based resin, a polycarbonate-based resin and a polystyrene-based resin.
<5> The laminate film according to any one of <1> to <4>, wherein a content of the conductive filler (a2) is 0.1% by mass or more and 50% by mass or less with respect to the resin composition (A).
<6> A method for producing the laminate film according to any one of <1> to <5>, comprising
   co-extruding a resin composition (A) containing a thermoplastic resin (a1) and a conductive filler (a2) and a resin composition (B) containing a thermoplastic resin (b1) for film formation,
   wherein a ratio of a thickness (x1) of the intermediate layer [I] in a lip portion in the co-extrusion and the thickness (X) of the intermediate layer [I] in the laminate film after the film formation (x1/X) is 1 to 40.
<7> The method for producing a laminate film according to <6>, wherein the thickness (x1) of the intermediate layer [I] in the lip portion in the co-extrusion is 40 µm or more and 500 µm or less.
<8> The method for producing a laminate film according to <6> or <7>, wherein the thickness (X) of the intermediate layer [I] in the laminate film after the film formation is 1 µm or more and 100 µm or less.
<9> A laminate film comprising an intermediate layer [I] comprising a resin composition (A) containing a thermoplastic resin (a1) and a conductive filler (a2), and both outer layers [II] comprising a resin composition (B) containing a thermoplastic resin (b1),
   wherein a thickness variation of the intermediate layer [I] is less than ± 10 µm, and
   a surface wetting index of at least one surface of the intermediate layer [I] is 30 dyne/cm or more.
<10> The laminate film according to <9>, wherein the resin composition (A) comprises a carboxylic acid-modified polyolefin-based resin (a3).
<11> The laminate film according to <10>, wherein a content of the carboxylic acid-modified polyolefin-based resin (a3) is 5% by mass or more and 50% by mass or less with respect to the resin composition (A).
<12> A laminate film comprising an intermediate layer [I] comprising a resin composition (A) containing a thermoplastic resin (a1) and a conductive filler (a2), and both outer layers [II] comprising a resin composition (B) containing a thermoplastic resin (b1),
   wherein the intermediate layer [I] is a layer formed by a plurality of layers, and
   a surface wetting index of at least one surface layer (i-1) of the intermediate layer [I] is 30 dyne/cm or more.
<13> The laminate film according to <12>, wherein at least one surface layer (i-1) of the intermediate layer [I] is a layer formed of a resin composition (A1) containing a thermoplastic resin (a1), a conductive filler (a2) and a carboxylic acid-modified polyolefin-based resin (a3).
<14> The laminate film according to <13>, wherein a content of the carboxylic acid-modified polyolefin-based resin (a3) is 5% by mass or more and 50% by mass or less with respect to the resin composition (A1).
<15> The laminate film according to any one of <12> to <14>, wherein the intermediate layer [I] has two layers which are a surface layer (i-1) and a middle layer (i-2) in this order, or three layers which are a surface layer (i-1), a middle layer (i-2) and a surface layer (i-1) in this order.
<16> The laminate film according to <15>, wherein the middle layer (i-2) of the intermediate layer [I] is a layer formed of a resin composition (A2) which contains the thermoplastic resin (a1) and the conductive filler (a2), and is substantially free of the carboxylic acid-modified polyolefin-based resin (a3).
<17> The laminate film according to any one of <12> to <16>, wherein a thickness variation of the intermediate layer [I] is less than ±10 µm.
<18> The laminate film according to any one of <9> to <17>, wherein a thickness (X) of the intermediate layer [I] is 1 µm or more and 100 µm or less, and a ratio of a thickness (Y) of each of the both outer layers [II] to the thickness (X) of the intermediate layer [I] (Y/X) is 1 or more and 5 or less.
<19> The laminate film according to any one of <9> to <18>, wherein a peeling strength between the intermediate layer [I] and the both outer layers [II] is less than 0.1 N/cm.
<20> The laminate film according to any one of <9> to <19>, wherein the thermoplastic resin (a1) is a polyolefin-based resin.
<21> The laminate film according to any one of <9> to <20>, wherein the conductive filler (a2) is carbon nanotubes.
<22> The laminate film according to any one of <9> to <21>, wherein the thermoplastic resin (b1) is a polyester-based resin.
<23> The laminate film according to any one of <9> to <22>, wherein a content of the conductive filler (a2) is 0.1% by mass or more and 50% by mass or less with respect to the resin composition (A).
<24> The laminate film according to any one of <1> to <5> and <9> to <23>, wherein a thickness of the laminate film is 20 µm or more and 400 µm or less.
<25> The laminate film according to any one of <1> to <5> and <9> to <24>, wherein the thickness of each of the both outer layers [II] is 5 µm or more and 150 µm or less.
<26> A conductive film obtained by peeling and removing the both outer layers [II] from the laminate film according to any one of <1> to <5> and <9> to <25>.
<27> A current collector comprising the conductive film according to <26>.
<28> A battery comprising the conductive film according to <26>.
<29> A laminate film comprising an intermediate layer [I] comprising a resin composition (A) containing a thermoplastic resin (a1) and a conductive filler (a2), both outer layers [II] comprising a resin composition (B) containing a thermoplastic resin (b1),
   wherein the resin composition (A) comprises a carboxylic acid-modified polyolefin-based resin (a3).

### Advantageous Effects of Invention

According to the first aspect of the present invention, there can be provided a laminate film comprising an intermediate layer having little thickness variation, a good appearance and high conductivity, and having an excellent peeling property between the intermediate layer and both outer layers, although the intermediate layer is a film as thin as 100 µm or less. According to the present invention, an intermediate layer obtained by peeling and removing the both outer layers from the laminate film can be particularly favorably used in applications of conductive films.

According to the second aspect of the present invention, there can be provided a laminate film comprising an intermediate layer having little thickness variation, excellent coatability with an aqueous liquid, a good appearance and high conductivity, and having an excellent peeling property between the intermediate layer and both outer layers. According to the second aspect of the present invention, a conductive film having little thickness variation, excellent coatability with an aqueous liquid, a good appearance and high conductivity can also be provided.

According to the third aspect of the present invention, there can be provided a laminate film comprising an intermediate layer having excellent coatability with an aqueous liquid, excellent mechanical properties such as tensile elongation at break, little thickness variation, a good appearance and high conductivity, and having an excellent peeling property between the intermediate layer and both outer layers. According to the third aspect of the present invention, there can also be provided a conductive film which has excellent coatability with an aqueous liquid, is excellent in mechanical properties such as tensile elongation at break, little thickness variation, a good appearance and high conductivity.

### Description of Embodiments

Hereinafter, the present invention will be described in detail. However, the contents of the present invention are not limited to the embodiments described below.

### <Terminology>

As used herein, the expression "X to Y" (X and Y are any numbers) includes, unless otherwise specified, not only the meaning of "X or more and Y or less", but also the meaning of "preferably more than X" and "preferably less than Y".

### [Laminate Film]

The laminate film according to the first aspect of the present invention is a laminate film comprising an intermediate layer [I] comprising a resin composition (A) containing a thermoplastic resin (a1) and a conductive filler (a2), and both outer layers [II] comprising a resin composition (B) containing a thermoplastic resin (b1). The thickness (X) of the intermediate layer [I] is 1 µm or more and 100 µm or less, the ratio of the thickness (Y) of the both outer layers [II] to the thickness (X) of the intermediate layer [I] (Y/X) is 1 or more and 5 or less, the thickness variation of the intermediate layer [I] is less than ± 10 µm, and the peeling strength between the intermediate layer [I] and the both outer layers [II] is less than 0.1 N/cm.

The thickness of the intermediate layer [I] and the thickness of the both outer layers [II] can be set by appropriately adjusting the extrusion amount and the extrusion rate of the resin composition, the temperature and the take-up speed of the casting roll, the lip gap of the T-die, the resin temperature in extrusion, and the like.

The peeling strength between the intermediate layer [I] and the both outer layers [II] can be set by setting the ratio of the thickness (Y) of the both outer layers [II] to the thickness (X) of the intermediate layer [I] (Y/X) to 1 or more and 5 or less, and appropriately adjusting the type of conductive filler (a2), the type of resin forming the both outer layers [II], the melt viscosity of the resin forming the intermediate layer [I], the melt viscosity of the resin forming the both outer layers [II], and the like.

The first aspect of the present invention has the effect of enabling provision of a laminate film comprising an intermediate layer having little thickness variation, a good appearance and high conductivity, and having an excellent peeling property between the intermediate layer and both outer layers, although the intermediate layer is a film as thin as 100 µm or less. The reason for this is not definitely known, but may be as follows.

In production of the laminate film, the intermediate layer resin composition extruded from the discharge outlet of the T-die is affected by members around the discharge outlet which it contacts, and the interfaces between the intermediate layer formed as a film and both outer layers are destabilized, which causes an increased thickness variation of the intermediate layer, so that the intermediate layer has a poor appearance, and a stick-slip (getting stuck) occurs as peeling of outer layers does not stabilize when the outer layers are peeled from the laminate film.

As a result of extensive research, the present inventors have found that although the desired intermediate layer is a thin film of 100 µm or less, the interfaces between the intermediate layer formed as a film and both outer layers can be stabilized and the outer layers can be peeled from the intermediate layer smoothly and speedily by setting the ratio of the thickness (Y) of the both outer layers to the thickness (X) of the intermediate layer (Y/X) within a specific range (1 or more and 5 or less), setting the thickness variation of the intermediate layer below a specific range (less than ±10 µm) and setting the peeling strength between the intermediate layer and the both outer layers below a specific range (less than 0.1 N/cm).

In the first aspect of the present invention, the thickness (X) of the intermediate layer [I] is 1 µm or more and 100 µm or less, and the ratio of the thickness (Y) of the both outer layers [II] to the thickness (X) of the intermediate layer [I] (Y/X) is 1 or more and 5 or less, preferably 1 to 4.5, more preferably 1 to 4, further more preferably 1 to 3.5. Here, the thicknesses of the both outer layers [II] may be different, but are preferably the same.

When the thickness ratio (Y/X) is in the above described range, a laminate film comprising an intermediate layer having little thickness variation, a good appearance and high conductivity, and having an excellent peeling property between the intermediate layer and both outer layers is obtained.

On the other hand, if the thickness ratio (Y/X) is outside the above-described range, there is a possibility that only intermediate layers having a large thickness variation, a poor appearance with, for example, flow marks and holes in the film, and poor conductivity can be obtained, and only laminate films having such a poor peeling property between the intermediate layer and both outer layers that a stick-slip (getting stuck) occurs as peeling of outer layers does not stabilize when the outer layers are peeled from the laminate film can be obtained.

The laminate film according to the second aspect of the present invention is a laminate film comprising an intermediate layer [I] comprising a resin composition (A) containing a thermoplastic resin (a1) and a conductive filler (a2), and both outer layers [II] comprising a resin composition (B) containing a thermoplastic resin (b1). The thickness variation of the intermediate layer [I] is less than ± 10 µm, and the surface wetting index of at least one surface of the intermediate layer [I] is 30 dyne/cm or more.

The second aspect of the present invention has the effect of enabling provision of a laminate film comprising an intermediate layer having little variation, excellent coatability with an aqueous liquid, a good appearance and high conductivity, and having an excellent peeling property between the intermediate layer and both outer layers. The present invention also has the effect of enabling provision of a conductive film having little thickness variation, excellent coatability, a good appearance and high conductivity.

The reason for this is not definitely known, but may be as follows.

By setting the thickness variation of the intermediate layer below a specific range (less than ±10 µm), the interfaces between the intermediate layer formed as a film and both outer layers can be stabilized, and the outer layers can be peeled from the intermediate layer smoothly and speedily.

By setting the surface wetting index of at least one surface of the intermediate layer, which can become a conductive film, equal to or greater than a specific value (30 dyne/cm or more), in application of an aqueous liquid to the intermediate layer, the interfacial surface tension of the intermediate layer can be made close to the surface tension of an aqueous liquid, and the contact angle at which the aqueous liquid contacts the surface of the intermediate layer decreases, so that the aqueous liquid can be easily applied uniformly to the surface of the intermediate layer.

Here, when the intermediate layer that can become a conductive film is used for a negative electrode current collector, a negative electrode aqueous coating material (for example, a negative electrode aqueous coating material obtained by mixing a negative electrode active material, a binder and an aqueous solvent) corresponds to the aqueous liquid.

In the second aspect of the present invention, the surface wetting index of at least one surface of the intermediate layer [I] is 30 dyne/cm or more, preferably 31 dyne/cm or more, more preferably 32 dyne/cm or more. The upper limit is not limited, but is typically 60 dyne/cm, preferably 50 dyne/cm.

The surface wetting index of at least one surface of the intermediate layer [I] can be set by appropriately adjusting, for example, the type and the amount of a resin incorporated into the resin composition (A) forming the intermediate layer.

When the wetting index is equal to or greater than a specific value (30 dyne/cm or more), the aqueous liquid is hardly repelled by the surface of the intermediate layer, so that the aqueous liquid can be uniformly applied to the intermediate layer.

On the other hand, if the wetting index is smaller than a specific value (less than 30 dyne/cm), repelling of the aqueous liquid by the surface of the intermediate layer, which causes unevenness, is likely to occur, and thus it may be impossible to uniformly apply the aqueous liquid to the intermediate layer.

The surface wetting index of at least one surface of the intermediate layer [I] can be determined by the method described in Examples.

The laminate film according to the third aspect of the present invention is a laminate film comprising an intermediate layer [I] comprising a resin composition (A) containing a thermoplastic resin (a1) and a conductive filler (a2), and both outer layers [II] comprising a resin composition (B) containing a thermoplastic resin (b1). The intermediate layer [I] is a layer formed by a plurality of layers, and the surface wetting index of at least one surface layer (i-1) of the intermediate layer [I] is 30 dyne/cm or more.

The third aspect of the present invention has the effect of enabling provision of a laminate film comprising an intermediate layer having excellent coatability with an aqueous liquid, excellent mechanical properties such as tensile elongation at break, little thickness variation, a good appearance and high conductivity, and having an excellent peeling property between the intermediate layer and both outer layers. The present invention also has the effect of enabling provision of a conductive film having excellent coatability with an aqueous liquid, excellent mechanical properties such as excellent tensile elongation at break, little thickness variation, a good appearance and high conductivity.

The reason for this is not definitely known, but may be as follows.

By providing a layer formed by a plurality of layers as the intermediate layer, mechanical properties such as tensile elongation at break can be obtained such that even if a material having a low elongation ratio is used for a middle layer (i-2) of the intermediate layer, formation of at least one surface layer (i-1) of the intermediate layer using a material having a high elongation ratio elongates the middle layer (i-2) such that it follows the surface layer (i-1), resulting in improvement of the elongation of the intermediate layer as a whole.

By setting the surface wetting index of at least one surface layer (i-1) of the intermediate layer, which can become a conductive film, equal to or greater than a specific value (30 dyne/cm or more), in application of an aqueous liquid to at least one surface layer (i-1) of the intermediate layer, the interfacial surface tension of the surface layer (i-1) of the intermediate layer can be made close to the surface tension of the aqueous liquid, and the contact angle at which the aqueous liquid contacts the surface of the intermediate layer decreases, so that the aqueous liquid can be easily applied uniformly to the surface of at least one surface layer (i-1) of the intermediate layer.

Here, when the intermediate layer which can become a conductive film is used for a negative electrode current collector, a negative electrode aqueous coating material (for example, a negative electrode aqueous coating material obtained by mixing a negative electrode active material, a binder and an aqueous solvent) corresponds to the aqueous liquid.

In the third aspect of the present invention, the surface wetting index of at least one surface layer (i-1) of the intermediate layer [I] is 30 dyne/cm or more, preferably 31 dyne/cm or more, more preferably 32 dyne/cm or more. The upper limit is not limited, but is typically 60 dyne/cm, preferably 50 dyne/cm.

The surface wetting index of at least one surface layer (i-1) of the intermediate layer [I] can be set by appropriately adjusting, for example, the type and the amount of a resin incorporated in the resin composition (A1) forming at least one surface layer (i-1) of the intermediate layer.

When the wetting index is equal to or greater than a specific value (30 dyne/cm or more), the aqueous liquid is hardly repelled by the surface of at least one surface layer (i-1) of the intermediate layer, so that the aqueous liquid can be uniformly applied to at least one surface layer (i-1) of the intermediate layer.

On the other hand, if the wetting index is smaller than a specific value (less than 30 dyne/cm), repelling of the aqueous liquid by the surface of at least one surface layer (i-1) of the intermediate layer, which causes unevenness, is likely to occur, and thus it may be impossible to uniformly apply the aqueous liquid to at least one surface layer (i-1) of the intermediate layer.

The surface wetting index of at least one surface layer (i-1) of the intermediate layer [I] can be determined by the method described in Examples.

### <Intermediate Layer [I]>

### (Thickness (X) of Intermediate Layer [I])

In the laminate film according to the first aspect of the present invention, the intermediate layer [I] has a thickness (X) of 1 µm or more and 100 µm or less, preferably 3 to 50 µm, more preferably 5 to 20 µm, further more preferably 5 to 18 µm, even more preferably 5 to 17 µm.

When the thickness (X) of the intermediate layer [I] is in the above-described range, handleability during film formation is improved, mechanical strength as a film is easily obtained, and the laminate film can be particularly favorably used in applications of conductive films where weight reduction and thickness reduction are required.

The thickness (X) of the intermediate layer [I] can be determined by the method described in Examples.

### (Thickness Variation of Intermediate Layer [I])

In the laminate film according to the first aspect, the intermediate layer [I] has a thickness variation of less than ±10 µm, preferably ±8 µm or less, more preferably ±5 µm or less, further more preferably ±3 µm or less.

When the thickness variation of the intermediate layer [I] is in the above-described range, the interfaces between the intermediate layer formed as a film and both outer layers stabilize, the appearance of the intermediate layer is improved, and a laminate film is easily obtained in which peeling of the outer layers stabilizes when the outer layers are peeled from the laminate film, and the laminate film has an excellent peeling property between the intermediate layer and the both outer layers.

The thickness variation is usually represented in percentage (%), but in the present invention, it is represented in micrometer (µm).

The thickness variation of the intermediate layer [I] can be determined by the method described in Examples.

### (Peeling Strength Between Intermediate Layer and Both outer layers)

The peeling strength between the intermediate layer and both outer layers when T peel test is performed on the laminate film according to the first aspect of the present invention under the condition of a peeling rate of 100 mm/min in an environment at a temperature of 25°C is less than 0.1 N/cm. The peeling strength between the intermediate layer and the both outer layers is preferably 0.08 N/cm or less, more preferably 0.06 N/cm or less, further more preferably 0.04 N/cm or less, even more preferably 0.035 N/cm or less. The lower limit is not limited, but is preferably 0.001 N/cm, more preferably 0.005 N/cm, further more preferably 0.01 N/cm.

When the peeling strength between the intermediate layer and the both outer layers is in the above-described range, not only peeling failures such as attachment of a part of the both outer layers to the intermediate layer are suppressed, but also the outer layers can be peeled from the intermediate layer smoothly and speedily. By this, the surface quality of the conductive film can be improved, and the productivity of conductive films, current collectors comprising a conductive film, and batteries comprising a conductive film can be improved.

When the peeling strength between the intermediate layer and the both outer layers is in the above-described range, it is possible to suppress the problem that the both outer layers peel from the intermediate layer during winding of the laminate film, and it is also possible to prevent peeling failures such as attachment of a part of the both outer layers to the intermediate layer in peeling of the outer layers from the laminate film.

The peeling strength between the intermediate layer and the both outer layers can be determined by the method described in Examples.

### (Thickness Variation of Intermediate Layer [I])

In the laminate film according to the second aspect of the present invention, the thickness variation of the intermediate layer [1] is less than ±10 µm, preferably ±8 µm or less, more preferably ±5 µm or less, further more preferably ±3 µm or less.

When the thickness variation of the intermediate layer [I] is in the above-described range, the interfaces between the intermediate layer formed as a film and both outer layers stabilize, the appearance of the intermediate layer is improved, and a laminate film is easily obtained in which peeling of the outer layers stabilizes when the outer layers are peeled from the laminate film, and the laminate film has an excellent peeling property between the intermediate layer and the both outer layers.

The thickness variation is usually represented in percentage (%), but in the present invention, it is represented in micrometer (µm).

The thickness variation of the intermediate layer [I] can be determined by the method described in Examples.

### (Thickness (X) of Intermediate Layer [I])

In the laminate film according to the second aspect of the present invention, the intermediate layer [I] has a thickness (X) of preferably 1 µm or more and 200 µm or less, more preferably 3 to 180 µm, further more preferably 5 to 150 µm, even more preferably 5 to 100 µm, even more preferably 5 to 80 µm.

When the thickness (X) of the intermediate layer [I] is in the above-described range, handleability during film formation is improved, mechanical strength as a film is easily obtained, and the laminate film can be particularly favorably used in applications of conductive films where weight reduction and thickness reduction are required.

The thickness (X) of the intermediate layer [I] can be determined by the method described in Examples.

### (Ratio of Thickness of Both outer layers [II] to Intermediate Layer [I] (Y/X))

In the laminate film according to the second aspect, the ratio of the thickness (Y) of each of the both outer layers [II] to the thickness (X) of the intermediate layer [I] (Y/X) is preferably 1 or more and 5 or less, more preferably 1 to 4.5, further more preferably 1 to 4, even more preferably 1 to 3.5. Here, the thicknesses of the both outer layers [II] may be different, but are preferably the same.

The thickness of the intermediate layer [I] and the thickness of the both outer layers [II] can be set by appropriately adjusting the extrusion amounts and the extrusion rates of the resin compositions (A) and (B), the temperature and the take-up speed of the casting roll, the lip gap of the T-die, the resin temperature in extrusion, and the like.

When the thickness ratio (Y/X) is in the above-described range, a laminate film comprising an intermediate layer having little thickness variation, a good appearance and high conductivity, and having an excellent peeling property between the intermediate layer and both outer layers is easily obtained.

On the other hand, if the thickness ratio (Y/X) is outside the above-described range, there is a possibility that only intermediate layers having a large thickness variation, a poor appearance with, for example, flow marks and holes in the film, and poor conductivity can be obtained, and only laminate films having such a poor peeling property between the intermediate layer and both outer layers that a stick-slip (getting stuck) occurs as peeling of outer layers does not stabilize when the outer layers are peeled from the laminate film can be obtained.

### (Peeling Strength Between Intermediate Layer [I] and Both outer layers [II])

The peeling strength between the intermediate layer [I] and the both outer layers [II] when T peel test is performed on the laminate film according to the second aspect of the present invention under the condition of a peeling rate of 100 mm/min in an environment at a temperature of 25°C is preferably less than 0.1 N/cm, more preferably 0.08 N/cm or less, further more preferably 0.06 N/cm or less, even more preferably 0.04 N/cm or less, even more preferably 0.035 N/cm or less. The lower limit is not limited, but is preferably 0.001 N/cm, more preferably 0.005 N/cm, further more preferably 0.01 N/cm.

The peeling strength between the intermediate layer [I] and the both outer layers [II] can be set by setting the ratio of the thickness (Y) of the both outer layers [II] to the thickness (X) of the intermediate layer [I] (Y/X) to, for example, 1 or more and 5 or less, and appropriately adjusting the type of conductive filler (a2), the type of resin forming the intermediate layer [I], the type of resin forming the both outer layers [II], the melt viscosity of the resin forming the intermediate layer [I], the melt viscosity of the resin forming the both outer layers [II], and the like.

When the peeling strength between the intermediate layer and the both outer layers is in the above-described range, not only peeling failures such as attachment of a part of the both outer layers to the intermediate layer are suppressed, but also the outer layers can be peeled from the intermediate layer smoothly and speedily. By this, the surface quality of the intermediate layer that can become a conductive film can be improved, and the productivity of conductive films, current collectors comprising a conductive film, and batteries comprising a conductive film can be improved.

When the peeling strength between the intermediate layer and the both outer layers is in the above-described range, it is possible to suppress the problem that the both outer layers peel from the intermediate layer during winding of the laminate film, and it is also possible to prevent peeling failures such as attachment of a part of the both outer layers to the intermediate layer in peeling of the outer layers from the laminate film.

The peeling strength between the intermediate layer and the both outer layers can be determined by the method described in Examples.

### (Layer Structure of Intermediate Layer [I])

The intermediate layer [I] according to the third embodiment of the present invention is a layer formed by a plurality of layers comprising a resin composition (A) containing a thermoplastic resin (a1) and a conductive filler (a2).

The layer structure of the intermediate layer [I] is not limited as long as it is a layer formed by a plurality of layers. The intermediate layer [I] is preferably formed by two or more layers with a surface layer (i-1) laminated on at least one side of a middle layer (i-2). Examples of the layer structure of the intermediate layer [I] include the configurations shown below. The total number of layers forming the middle layer (i-2) can be appropriately adjusted according to an application and a use purpose.
- Surface layer (i-1)/middle layer (i-2)
- Surface layer (i-1)/middle layer (i-2)/surface layer (i-1)

The layer structure of the intermediate layer [I] in the present invention is preferably a layer structure in which the intermediate layer [I] is formed by two layers which are a surface layer (i-1) and a middle layer (i-2) in this order, or a layer structure in which the intermediate layer is formed by three layers which are a surface layer (i-1), a middle layer (i-2) and a surface layer (i-1) in this order, more preferably a layer structure in which the intermediate layer [I] is formed by three layers which are a surface layer (i-1), a middle layer (i-2) and a surface layer (i-1) in this order.

Since the layer structure in which the intermediate layer [I] is formed by two layers is identical to a configuration obtained by removing one surface layer (i-1) from the layer structure in which the intermediate layer [I] is formed by three layers, even the middle layer (i-2) in the two-layer structure is referred to as a middle layer as ever for the sake of convenience.

### (Surface Layer (i-1))

From the viewpoint of improving coatability with an aqueous liquid with respect to the intermediate layer [I], at least one surface layer (i-1) of the intermediate layer [I] preferably comprises a resin composition (A1) containing a thermoplastic resin (a1), a conductive filler (a2) and a carboxylic acid-modified polyolefin-based resin (a3).

### (Middle Layer (i-2))

On the other hand, from the viewpoint of obtaining mechanical properties such as tensile elongation at break, the middle layer (i-2) of the intermediate layer [I] preferably comprises a resin composition (A2) which contains a thermoplastic resin (a1) and a conductive filler (a2), and is substantially free of a carboxylic acid-modified polyolefin-based resin (a3).

Here, the term "substantially free of" includes not only cases where the component is not contained at all, that is, its content is 0% by mass, but also cases where the content is, for example, 0.05% by mass or less (may be 0.03% by mass or less or 0.01% by mass or less in some cases), and has as little effect as the component is not contained.

### (Volume Resistivity of Intermediate Layer [I])

In the laminate film, the intermediate layer [I] has a volume resistivity of preferably 500 Ω·cm or less, more preferably 300 Ω·cm or less, further more preferably 200 Ω·cm or less, even more preferably 100 Ω·cm or less, even more preferably 50 Ω·cm or less.

When the volume resistivity of the intermediate layer [I] is in the above-described range, a laminate film comprising an intermediate layer having high conductivity is obtained, and an intermediate layer obtained by peeling and removing both outer layers from the laminate film can be particularly favorably used in applications of conductive films.

The volume resistivity of the intermediate layer [I] can be determined by the method described in Examples.

### (Resin Composition (A))

The intermediate layer [I] is a layer comprising a resin composition (A) containing a thermoplastic resin (a1) and a conductive filler (a2). In the second aspect, further, the resin composition (A) preferably contains a carboxylic acid-modified polyolefin-based resin (a3).

### (Thermoplastic resin (a1))

In the third aspect, the resin composition (A) forming the whole intermediate layer [I] formed by a plurality of layers contains a thermoplastic resin (a1). When the intermediate layer [I] is a layer formed by two layers or three layers, the resin composition (A1) forming the surface layer (i-1) and the resin composition (A2) forming the middle layer (i-2) contain the thermoplastic resin (a1).

The thermoplastic resin (a1) is not limited, and may be any of various thermoplastic resins. Among the thermoplastic resins, polyolefin-based resins are preferred from the viewpoint of securing the mechanical strength of the film.

Examples of the polyolefin-based resin include homopolymers of an α-olefin having about 2 to 8 carbon atoms, such as ethylene, propylene, 1-butene, 3-methyl-1-butene, 1-pentene, 4-methyl-1-pentene or 1-hexene; copolymers of any of these α-olefins, and another α-olefin having about 2 to 12 carbon atoms, such as ethylene, propylene, 1-butene, 3-methyl-1-butene, 1-pentene, 4-methyl-1-pentene, 1-hexene, 1-octene or 1-decene, or a vinyl compound such as vinyl acetate, acrylic acid, methacrylic acid, an acrylic acid ester, a methacrylic acid ester, styrene or vinyl chloride; and graft polymers obtained by grafting the vinyl compound or the like to the homopolymer or the copolymer of an α-olefin. Of these, polypropylene-based resins or polyethylene-based resins are preferred, and polypropylene-based resins are more preferred, from the viewpoint of stabilizing the interfaces between the intermediate layer formed as a film and both outer layers.

The polypropylene-based resin may be a propylene homopolymer (homopolymer of propylene), or a copolymer of propylene and an olefin having 2 to 20 carbon atoms. One or more of the olefins may be used for copolymerization with propylene. Specific examples of the propylene copolymer include propylene-ethylene copolymers, propylene-1-butene copolymers, and propylene-ethylene-1-butene copolymers. Of these, propylene homopolymers are preferred from the viewpoint of formability of the intermediate layer.

The polyethylene-based resin may be an ethylene homopolymer (homopolymer of ethylene), or may be copolymerized with a comonomer component of ethylene and an α-olefin, a vinyl monomer or the like. Specific examples of the ethylene copolymer include ethylene-1-butene copolymers, ethylene-4-methyl-1-pentene copolymers, ethylene-1-hexene copolymers, ethylene-1-octene copolymers, ethylene-vinyl acetate copolymers, ethyleneacrylic acid copolymers, ethylene-methacrylic acid copolymers, ethylene methyl methacrylate copolymers, and ethylene-ethyl acrylate copolymers.

The polypropylene-based resin has an isotactic pentad fraction of preferably 80 to 99%, more preferably 83 to 98%, further more preferably 85 to 97%, where the isotactic pentad fraction indicates tacticity.

An excessively low isotactic pentad fraction may lead to a decrease in mechanical strength as a film. On the other hand, the upper limit of the isotactic pentad fraction is specified at an upper limit value industrially available at the present time, but is not limited thereto if a higher-regularity resin is industrially developed in the future. The isotactic pentad fraction means the proportion of a steric structure in which five methyl groups being side chains with respect to the main chain made by carbon-carbon bonds constituted of arbitrary continuous five propylene units are all positioned in the same direction. The isotactic pentad fraction is determined from pentad units in the polypropylene molecular chain which are measured by signals of the methyl group region of a ¹³C-NMR spectrum. The assignment of signals of the methyl group region is according to A. Zambelli et al. (Macromol. 8,687 (1975)).

The polypropylene-based resin has a Mw/Mn of preferably 1.5 or more, more preferably 2.0 or more, where Mw/Mn is a parameter indicating a molecular weight distribution. On the other hand, the upper limit is preferably 10.0 or less, more preferably 8.0 or less, further more preferably 6.0 or less. A lower Mw/Mn means a narrower molecular weight distribution. Setting Mw/Mn to 1.5 or more achieves sufficient extrudability, and enables industrial mass production. On the other hand, setting Mw/Mn to 10.0 or less can ensure sufficient mechanical strength. Mw denotes a weight average molecular weight, Mn denotes a number average molecular weight, Mw/Mn is obtained by a GPC (gel permeation chromatography) method.

The polypropylene-based resin has a melt flow rate (MFR) of preferably 1.0 to 30 g/10 min, more preferably 5.0 to 20 g/10 min.

When the melt flow rate (MFR) is in the above-described range, sufficient melt viscosity is exhibited during molding of the resin composition (A) and mechanical strength as a film can be secured even in the case of the viscosity being raised due to filling of a conductive filler.

The melt flow rate (MFR) is the value as measured according to JIS K7210-1 (2014) under the condition of a temperature of 230°C and a load of 2.16 kg.

Examples of commercially available products that can be used as the polyolefin-based resin include trade names "Novatec PP", "WINTEC" (manufactured by Japan Polypropylene Corp.); "Notio", "Tafiner XR" (manufactured by Mitsui Chemicals Inc.); "Zelas", "Thermorun" (manufactured by Mitsubishi Chemical Corp.); "Sumitomo Noblen", "Tafthren" (manufactured by Sumitomo Chemical Co., Ltd.); "Prime PP", "Prime TPO" (manufactured by Prime Polymer Co., Ltd.); "Adflex", "Adsyl", "HMS-PP (PF814)" (manufactured by SunAllomer Ltd.); and "Versify", "Inspire" (manufactured by Dow Chemical Co.).

### (Content of Thermoplastic Resin (a1))

The content of the thermoplastic resin (a1) according to the first and second aspects of the invention is preferably 50 to 99% by mass, more preferably 60 to 98% by mass, further more preferably 70 to 97% by mass with respect to the resin composition (A).

When the content of the thermoplastic resin (a1) is in the above-described range, the dispersibility of the conductive filler (a2) is improved, mechanical strength as a film is secured, and a laminate film is easily obtained in which peeling of outer layers stabilizes when the outer layers are peeled from the laminate film, and the laminate film also has an excellent peeling property between the intermediate layer and the both outer layers.

In the third aspect of the present invention, the resin composition (A) forming the whole intermediate layer [I] formed by a plurality of layers contains the thermoplastic resin (a1).

In the resin composition (A), the content of the thermoplastic resin (a1) is preferably 60 to 95% by mass, more preferably 65 to 90% by mass, further more preferably 70 to 88% by mass with respect to the resin composition (A).

When the content of the thermoplastic resin (a1) with respect to the resin composition (A) is in the above-described range, the dispersibility of the conductive filler (a2) is improved, mechanical strength as a film is secured, and a laminate film is easily obtained in which peeling of outer layers stabilizes when the outer layers are peeled from the laminate film, and the laminate film also has an excellent peeling property between the intermediate layer and the both outer layers.

The resin composition (A1) forming the surface layer (i-1) of the intermediate layer [I] contains the thermoplastic resin (a1).

In the resin composition (A1), the content of the thermoplastic resin (a1) is preferably 60 to 98% by mass, more preferably 65 to 95% by mass, further more preferably 70 to 90% by mass with respect to the resin composition (A1).

When the content of the thermoplastic resin (a1) with respect to the resin composition (A1) is in the above-described range, the dispersibility of the conductive filler (a2) is improved, mechanical strength as a film is secured, and a laminate film is easily obtained in which peeling of outer layers stabilizes when the outer layers are peeled from the laminate film, and the laminate film also has an excellent peeling property between the intermediate layer and the both outer layers.

The resin composition (A2) forming the middle layer (i-2) of the intermediate layer [I] contains the thermoplastic resin (a1).

In the resin composition (A2), the content of the thermoplastic resin (a1) is preferably 60 to 99.5% by mass, more preferably 65 to 99% by mass, further more preferably 70 to 98% by mass with respect to the resin composition (A2).

When the content of the thermoplastic resin (a1) with respect to the resin composition (A2) is in the above-described range, the dispersibility of the conductive filler (a2) is improved, mechanical strength as a film is secured, and an intermediate layer having excellent mechanical properties such as excellent tensile elongation at break is easily obtained.

### (Conductive Filler (a2))

The resin composition (A) forming the whole intermediate layer [I] formed by a plurality of layers contains the conductive filler (a2).

When the intermediate layer [I] is a layer formed by two layers or three layers, the resin composition (A1) forming the surface layer (i-1) and the resin composition (A2) forming the middle layer (i-2) contain the conductive filler (a2).

The conductive filler (a2) according to the first and second aspects of the present invention is not limited, and examples thereof include carbon fillers such as carbon black, carbon nanotubes, carbon nanofibers, graphite carbon and carbon fibers; powdered or fibrous metals; metal oxides; and metal nitrides. Of these, carbon fillers are preferred, at least one selected from the group consisting of a carbon nanotube and carbon black is more preferred, and carbon nanotubes are further more preferred from the viewpoint that good conductivity is obtained even when the amount of the conductive filler incorporated in the resin composition (A) is small, and the peeling strength between the intermediate layer and both outer layers is easily set below a specific range (less than 0.1 N/cm). On the other hand, carbon black is preferred from the viewpoint of economic efficiency.

The conductive filler (a2) according to the third aspect of the present invention is not limited, and examples thereof include carbon fillers such as carbon black, carbon nanotubes, carbon nanofibers, graphite carbon and carbon fibers; powdered or fibrous metals; metal oxides; and metal nitrides. Of these, carbon fillers are preferred, at least one selected from the group consisting of a carbon nanotube and carbon black is more preferred.

As the conductive filler incorporated in the resin composition (A) forming the whole intermediate layer [I] and the resin composition (A1) forming the surface layer (i-1) and the resin composition (A2) forming the middle layer (i-2), carbon nanotubes are further more preferred from the viewpoint that good conductivity is easily obtained even when the amount of the conductive filler is small, and the peeling strength between the intermediate layer and both outer layers is easily set below a specific range (less than 0.1 N/cm). On the other hand, carbon black is preferred from the viewpoint of economic efficiency.

In particular, the conductive filler incorporated in the resin composition (A2) forming the middle layer (i-2) is preferably carbon nanotubes from the viewpoint of obtaining an intermediate layer having excellent mechanical properties such as excellent tensile elongation at break.

The carbon nanotube may be either a single-walled carbon nanotube or a multi-walled carbon nanotube. The method for producing carbon nanotubes is not limited, and may be any of thermal decomposition methods such as thermal CVD and plasma CVD, an arc discharge method and a laser vaporization method.

In the present invention, for example, carbon nanotubes described in JP 2018-127397 A can be used.

On the other hand, specific examples of the carbon black include Ketjenblack; acetylene black; furnace black; channel black; and carbon black formed as a by-product in production of a synthetic gas containing hydrogen and carbon monoxide by partially oxidizing a hydrocarbon in the presence of hydrogen and oxygen, such as naphtha, or its oxidatively or reductively treated counterpart, with acetylene black and Ketjenblack being preferred. These carbon blacks may be used alone, or used in combination of two or more thereof.

The carbon black is preferably in the form of particles having an aspect ratio of 1 to 5. The aspect ratio refers to, when the carbon black is in the form of particles, a value obtained by dividing the length of the long axis by the length of the short axis of a spherical component forming the structure of the carbon black. On the other hand, the aspect ratio refers to, when the carbon black is in the form of fibers, a value obtained by dividing the fiber length by the fiber diameter.

The average primary particle diameter of the carbon black is preferably 10 nm or more, more preferably 20 nm or more. On the other hand, the upper limit is preferably 60 nm or less, more preferably 50 nm or less. Setting the average primary particle diameter of the carbon black to 10 nm or more improves dispersibility with respect to the resin composition (A), and can discourage generation of aggregates due to undispersed carbon black. On the other hand, setting the average primary particle diameter of the carbon black to 60 nm or less can reduce the volume resistivity serving as an index of conductivity in dispersion in the resin composition (A), and can ensure good conductivity.

The carbon black has a DBP absorption of preferably 50 ml/100 g or more, more preferably 100 ml/100 g or more as the lower limit. On the other hand, the upper limit is preferably 750 ml/100 g or less, more preferably 400 ml/100 g or less. A DBP absorption of 50 ml/100 g or more leads to a large structure, and can ensure good conductivity. On the other hand, a DBP absorption of 750 ml/100 g or less improves dispersibility with respect to the resin composition (A), and can discourage generation of aggregates due to undispersed carbon black.

The DBP absorption indicates, by the amount of dibutyl phthalate (DBP) used to fill gaps between carbon black particles, a grade of a structure being the structure of particles aggregated by chemical or physical bonding, and is the amount (ml) of DBP that can be included per 100 g of carbon black.

Examples of commercially available products that can be used as the carbon black include trade names "BLACK PEAPLS", "VULCAN", "STERLING" (manufactured by Cabot Corporation); "Ketjenblack EC" (manufactured by Lion Specialty Chemicals Co., Ltd.); "Denka Black" (manufactured by Denki Kagaku Kogyo Kabushiki Kaisha); "TOKABLACK" (manufactured by Tokai Carbon Co., Ltd.); "Asahi Carbon Black" (manufactured by Asahi Carbon Co., Ltd.); and "Mitsubishi Carbon Black" (manufactured by Mitsubishi Chemical Corporation).

### (Content of Conductive Filler (a2))

In the first and second aspects of the present invention, the content of the conductive filler (a2) is preferably 0.1 to 50% by mass, more preferably 1 to 40% by mass, further more preferably 2 to 30% by mass with respect to the resin composition (A).

When the content of the conductive filler (a-2) is in the above-described range, dispersibility with respect to the resin composition (A) is improved, generation of aggregates due to the undispersed conductive filler can be discouraged, and a laminate film comprising an intermediate layer having a good appearance and high conductivity is easily obtained.

In particular, when the conductive filler (a2) is carbon nanotubes, the content of the carbon nanotubes is preferably 0.1 to 30% by mass, more preferably 0.3 to 20% by mass, further more preferably 0.5 to 10% by mass, even more preferably 1 to 8% by mass with respect to the resin composition (A).

When the conductive filler (a2) is carbon black, the content of the carbon black is preferably 1 to 50% by mass, more preferably 3 to 40% by mass, further more preferably 5 to 35% by mass, even more preferably 5 to 30% by mass, even more preferably 5 to 25% by mass with respect to the resin composition (A).

In the third aspect of the present invention, the resin composition (A) forming the whole intermediate layer [I] formed by a plurality of layers contains the conductive filler (a2).

In the resin composition (A), the content of the conductive filler (a2) is preferably 0.1% by mass or more and 50% by mass or less, more preferably 1 to 40% by mass, further more preferably 2 to 30% by mass, even more preferably 2 to 20% by mass, even more preferably 3 to 15% by mass with respect to the resin composition (A).

When the content of the conductive filler (a2) with respect to the resin composition (A) is in the above-described range, dispersibility with respect to the resin composition (A) is improved, generation of aggregates due to the undispersed conductive filler can be discouraged, and a laminate film comprising an intermediate layer having a good appearance and high conductivity is easily obtained.

In particular, when the conductive filler (a2) incorporated in the resin composition (A) is carbon nanotubes, the content of the carbon nanotubes is preferably 0.1 to 20% by mass, more preferably 0.5 to 15% by mass, further more preferably 1 to 10% by mass, even more preferably 1.5 to 8% by mass with respect to the resin composition (A).

When the conductive filler (a2) incorporated in the resin composition (A) is carbon black, the content of the carbon black is preferably 1 to 40% by mass, more preferably 3 to 35% by mass, further more preferably 5 to 30% by mass, even more preferably 7 to 20% by mass with respect to the resin composition (A).

In the third aspect of the present invention, when the intermediate layer [I] is a layer formed by two layers or three layers, the resin composition (A1) forming the surface layer (i-1) contains the conductive filler (a2).

In the resin composition (A1), the content of the conductive filler (a2) is preferably 0.1 to 20% by mass, more preferably 0.5 to 15% by mass, further more preferably 1 to 10% by mass, even more preferably 1.5 to 8% by mass with respect to the resin composition (A1).

When the content of the conductive filler (a2) with respect to the resin composition (A1) is in the above-described range, dispersibility with respect to the resin composition (A1) is improved, generation of aggregates due to the undispersed conductive filler can be discouraged, and a laminate film comprising an intermediate layer having a good appearance and high conductivity is easily obtained.

In particular, when the conductive filler (a2) incorporated in the resin composition (A1) is carbon nanotubes, the content of the carbon nanotubes is preferably 0.1 to 20% by mass, more preferably 0.5 to 15% by mass, further more preferably 1 to 10% by mass, even more preferably 1.5 to 8% by mass with respect to the resin composition (A1).

When the conductive filler (a2) incorporated in the resin composition (A1) is carbon black, the content of the carbon black is preferably 1 to 40% by mass, more preferably 3 to 35% by mass, further more preferably 5 to 30% by mass, even more preferably 7 to 20% by mass with respect to the resin composition (A1).

In the third aspect of the present invention, when the intermediate layer [I] is a layer formed by two layers or three layers, the resin composition (A2) forming the middle layer (i-2) contains the conductive filler (a2).

In the resin composition (A2), the content of the conductive filler (a2) is preferably 1 to 40% by mass, more preferably 1.5 to 35% by mass, further more preferably 2 to 30% by mass, even more preferably 3 to 25% by mass with respect to the resin composition (A2).

When the content of the conductive filler (a2) with respect to the resin composition (A2) is in the above-described range, dispersibility with respect to the resin composition (A2) is improved, generation of aggregates due to the undispersed conductive filler can be discouraged, a laminate film comprising an intermediate layer having a good appearance and high conductivity is easily obtained, and an intermediate layer having excellent mechanical properties such as tensile elongation at break is easily obtained.

In particular, when the conductive filler (a2) incorporated in the resin composition (A2) is carbon nanotubes, the content of the carbon nanotubes is preferably 0.1 to 20% by mass, more preferably 0.5 to 15% by mass, further more preferably 1 to 10% by mass, even more preferably 1.5 to 8% by mass with respect to the resin composition (A2).

When the conductive filler (a2) incorporated in the resin composition (A2) is carbon black, the content of the carbon black is preferably 1 to 40% by mass, more preferably 1.5 to 35% by mass, further more preferably 2 to 30% by mass, even more preferably 3 to 25% by mass with respect to the resin composition (A2).

### (Carboxylic Acid-Modified Polyolefin-Based Resin (a3))

In the second embodiment of the present invention, the resin composition (A) preferably contains a carboxylic acid-modified polyolefin-based resin (a3) from the viewpoint of improving coatability with an aqueous liquid with respect to the intermediate layer [I].

The carboxylic acid-modified polyolefin-based resin (a3) is a resin obtained by modifying a polyolefin-based resin with a carboxylic acid.

The polyolefin-based resin modified with a carboxylic acid may be the same as any of the polyolefin-based resins defined as the thermoplastic resin (a1).

Examples of the carboxylic acid compound used for carboxylic acid modification include acid anhydrides such as maleic anhydride, phthalic anhydride, acetic anhydride and succinic anhydride, methacrylic acid, maleic acid, and acrylic acid. Among them, at least one selected from the group consisting of maleic anhydride, methacrylic acid, maleic acid and acrylic acid is preferred, with maleic anhydride being more preferred.

The carboxylic acid-modified polyolefin-based resin (a3) may be formed by copolymerization reaction of a raw material monomer for polyolefin-based resin and a carboxylic acid compound, or may be formed by addition reaction of a carboxylic acid compound with a polyolefin-based resin.

The carboxylic acid-modified polyolefin-based resin (a3) is preferably a maleic acid-modified polyolefin-based resin, more preferably a maleic acid-modified polypropylene-based resin or a maleic acid-modified polyethylene-based resin, further more preferably a maleic acid-modified polypropylene-based resin.

The polyolefin-based resin used for the carboxylic acid-modified polyolefin-based resin (a3) and the polyolefin-based resin used for the thermoplastic resin (a1) may be the same or different.

The carboxylic acid-modified polyolefin-based resin (a3) has an acid value of preferably 1 to 70 mg KOH/g, more preferably 10 to 65 mg KOH/g, further more preferably 20 to 60 mg KOH/g, from the viewpoint of improving coatability with an aqueous liquid with respect to the intermediate layer [I].

When the acid value of the carboxylic acid-modified polyolefin-based resin (a3) is in the above-described range, the surface wetting index of at least one surface of the intermediate layer [I] can be set equal to or greater than a specific value, and an aqueous liquid can be easily applied uniformly to the surface of the intermediate layer [I].

### Examples of commercially available products that can be used as the carboxylic acid-modified polyolefin-based resin (a3) include "UMEX 1001" and "UMEX 1010" (manufactured by Sanyo Chemical Industries, Ltd.).

The content of the carboxylic acid-modified polyolefin-based resin (a3) is preferably 5% by mass or more and 50% by mass or less, more preferably 5 to 40% by mass, further more preferably 5 to 30% by mass, even more preferably 7 to 25% by mass with respect to the resin composition (A).

When the content of the carboxylic acid-modified polyolefin-based resin (a3) is in the above-described range, the surface wetting index of at least one surface of the intermediate layer [I] can be set equal to or greater than a specific value, and an aqueous liquid can be easily applied uniformly to the surface of the intermediate layer [I].

In the third aspect of the present invention, the resin composition (A1) forming the surface layer (i-1) of the intermediate layer [I] preferably contains the carboxylic acid-modified polyolefin-based resin (a3) from the viewpoint of coatability with an aqueous liquid with respect to the intermediate layer [I].

The carboxylic acid-modified polyolefin-based resin (a3) is a resin obtained by modifying a polyolefin-based resin with a carboxylic acid.

The polyolefin-based resin modified with a carboxylic acid is the same as defined in the second aspect.

The resin composition (A1) forming the surface (i-1) of the intermediate layer [I] preferably contains the carboxylic acid-modified polyolefin-based resin (a3).

In the resin composition (A1), the content of the carboxylic acid-modified polyolefin-based resin (a3) is preferably 5% by mass or more and 50% by mass or less, more preferably 5 to 40% by mass, further more preferably 5 to 30% by mass, even more preferably 7 to 25% by mass with respect to the resin composition (A1).

When the content of the carboxylic acid-modified polyolefin-based resin (a3) is in the above-described range, the surface wetting index of at least one surface layer (i-1) of the intermediate layer [I] can be set equal to or greater than a specific value, and an aqueous liquid can be easily applied uniformly to the surface of the intermediate layer [I].

### (Additives)

If necessary, the resin composition (A) may contain additives in addition to the thermoplastic resin (a1) and the conductive filler (a2) as long as the properties of the intermediate layer [I] are not impaired. If necessary, the resin composition (A) may contain various additives in addition to the thermoplastic resin (a1), the conductive filler (a2), and preferably the carboxylic acid-modified polyolefin-based resin (a3) as long as the properties of the intermediate layer [I] are not impaired. Alternatively, if necessary, the resin composition (A) forming the whole intermediate layer [I] formed by a plurality of layers, the resin composition (A1) forming the surface layer (i-1) of the intermediate layer [I], and the resin composition (A2) forming the middle layer (i-2) of the intermediate layer [I] may contain various additives as long as the properties of the intermediate layer [I] are not impaired.

Examples of the additives include inorganic particles of silica, talc, kaolin, calcium carbonate and the like, pigments such as titanium oxide and carbon black, flame retardants, weathering stabilizers, thermal stabilizers, antistatic agents, melt viscosity modifiers, crosslinkers, lubricants, nucleating agents, plasticizers, anti-aging agents, antioxidants, light stabilizers, ultraviolet absorbers, neutralizers, anti-fogging agents, anti-blocking agents, slipping agents, and colorants.

When additives are used, their content with respect to the resin composition (A) is typically 30% by mass or less, preferably 0.0001 to 20% by mass, more preferably 0.001 to 15% by mass, further more preferably 0.01 to 10% by mass.

### (Tensile Elongation at Break of Intermediate Layer [I])

In the laminate film according to the third aspect of the present invention, the tensile elongation at break of the intermediate layer [I] in a machine direction (MD) is preferably 100% or more, more preferably 120% or more, further more preferably 150% or more, even more preferably 200% or more, even more preferably 250% or more, even more preferably 300% or more. Here, the upper limit of the tensile elongation at break is not limited, but is typically 500% or less, preferably 400% or less.

The tensile elongation at break of the intermediate layer [I] in a machine direction (MD) can be determined by the method described in Examples.

### (Thickness Variation of Intermediate Layer [I])

In the laminate film of the third aspect of the present invention, the thickness variation of the intermediate layer [I] is preferably less than ± 10 µm, more preferably ±8 µm or less, further more preferably ±5 µm or less, even more preferably ±3 µm or less.

When the thickness variation of the intermediate layer [I] is in the above-described range, the interfaces between the intermediate layer formed as a film and both outer layers stabilize, the appearance of the intermediate layer is improved, and a laminate film is easily obtained in which peeling of outer layers stabilizes when the outer layers are peeled from the laminate film, and the laminate film has an excellent peeling property between the intermediate layer and both outer layers.

The thickness variation is usually represented in percentage (%), but in the present invention, it is represented in micrometer (µm).

The thickness variation of the intermediate layer [I] can be determined by the method described in Examples.

### (Thickness (X) of Intermediate Layer [I])

In the laminate film according to the third aspect of the present invention, the thickness (X) of the intermediate layer [I] is preferably 1 µm or more and 200 µm or less, more preferably 3 to 180 µm, further more preferably 5 to 150 µm, even more preferably 5 to 100 µm, even more preferably 5 to 80 µm.

When the thickness (X) of the intermediate layer [I] is in the above-described range, handleability during film formation is improved, mechanical strength as a film is easily obtained, and the laminate film can be particularly favorably used in applications of conductive films where weight reduction and thickness reduction are required.

The thickness (X) of the intermediate layer [I] can be determined by the method described in Examples.

### (Thickness of Surface Layer (i-1))

In the intermediate layer [I] according to the third aspect of the present invention, the thickness of the surface layer (i-1) is preferably 1 to 80 µm, more preferably 1.5 to 50 µm, further more preferably 2 to 30 µm, even more preferably 3 to 25 µm.

When the thickness of the surface layer (i-1) is in the above-described range, handleability during film formation is improved, and mechanical strength as a film is easily obtained.

The surface layer (i-1) can be determined by the method described in Examples.

### (Thickness of Middle Layer (i-2))

In the intermediate layer [I] according to the third aspect of the present invention, the thickness of the middle layer (i-2) is preferably 2 to 160 µm, more preferably 3 to 100 µm, further more preferably 4 to 60 µm, even more preferably 6 to 50 µm.

When the thickness of the middle layer (i-2) is in the above-described range, handleability during film formation is improved, and an intermediate layer having excellent mechanical properties such as excellent tensile elongation at break is easily obtained.

The middle layer (i-2) can be determined by the method described in Examples.

### (Thickness Ratio of Middle Layer (i-2) to Surface Layer (i-1))

In the intermediate layer [I], the thickness ratio of the middle layer (i-2) to the surface layer (i-1) ((i-2)/(i-1)) is preferably 0.5 or more and 20 or less, more preferably 0.75 to 10, further more preferably 1.0 to 8, even more preferably 1.2 to 5, from the viewpoint of the film appearance and mechanical properties. Here, the thicknesses of each of the both surface layers(i-1) may be different, but are preferably the same. The thickness ratio can be adjusted by appropriately adjusting the extrusion amounts of the surface layer and the middle layer.

Meeting the above-described range improves the film appearance and mechanical properties, and is thus preferred.

### (Ratio of Thickness of Both outer layers [II] to Intermediate Layer [I] (Y/X))

In the laminate film according to the third aspect of the present invention, the ratio of the thickness (Y) of each of both outer layers [II] to the thickness (X) of the intermediate layer[I] (Y/X) is preferably 1 or more and 5 or less, more preferably 1 to 4.5, further more preferably 1 to 4, even more preferably 1 to 3.5. Here, the thicknesses of the both outer layers [II]may be different, but are preferably the same.

The thickness of the intermediate layer [I] and the thickness of the both outer layers [II] can be set by appropriately adjusting the extrusion amounts and the extrusion rates of the resin compositions (A) and (B), the temperature and the take-up speed of the casting roll, the lip gap of the T-die, the resin temperature in extrusion, and the like.

When the thickness ratio (Y/X) is in the above-described range, a laminate film comprising an intermediate layer having little thickness variation, a good appearance and high conductivity, and having an excellent peeling property between the intermediate layer and both outer layers is easily obtained.

On the other hand, if the thickness ratio (Y/X) is outside the above-described range, there is a possibility that only intermediate layers having a large thickness variation, a poor appearance with, for example, flow marks and holes in the film, and poor conductivity, and only laminate films having a poor peeling property between the intermediate layer and both outer layers, so that a stick-slip (getting stuck) occurs as peeling of outer layers does not stabilize when the outer layers are peeled from the laminate film.

### (Peeling Strength Between Intermediate Layer [I] and Both outer layers [II])

The peeling strength between the intermediate layer [I] and both outer layers[II] when T peel test is performed on the laminate film according to the third aspect of the present invention under the condition of a peeling rate of 100 mm/min in an environment at a temperature of 25°C is preferably less than 0.1 N/cm, more preferably 0.08 N/cm or less, further more preferably 0.06 N/cm or less, even more preferably 0.04 N/cm or less, even more preferably 0.035 N/cm or less. The lower limit is not limited, but is preferably 0.001 N/cm, more preferably 0.005 N/cm, further more preferably 0.01 N/cm.

The peeling strength between the intermediate layer [I] and both outer layers [II] can be set by setting the ratio of the thickness (Y) of both outer layers [II] to the thickness (X) of the intermediate layer [I] (Y/X) to, for example, 1 or more and 5 or less, and appropriately adjusting the type of conductive filler (a2), the type of resin forming the intermediate layer [I], the type of resin forming the both outer layers [II], the melt viscosity of resin forming the intermediate layer [I], the melt viscosity of resin forming the both outer layers [II], and the like.

When the peeling strength between the intermediate layer and both outer layers is in the above-described range, not only peeling failures such as attachment of a part of the both outer layers to the intermediate layer are suppressed, but also the outer layers can be peeled from the intermediate layer smoothly and speedily. By this, the surface quality of the intermediate layer that can become a conductive film can be improved, and the productivity of conductive films, current collectors comprising a conductive film, and batteries comprising a conductive film can be improved.

When the peeling strength between the intermediate layer and the both outer layers is in the above-described range, it is possible to suppress the problem that the both outer layers peel from the intermediate layer during winding of the laminate film, and it is also possible to prevent peeling failures such as attachment of a part of the both outer layers to the intermediate layer in peeling of the outer layers from the laminate film.

The peeling strength between the intermediate layer and the both outer layers can be determined by the method described in Examples.

### (Volume Resistivity of Intermediate Layer [I])

In the laminate film according to the third aspect of the present invention, the intermediate layer [I] has a volume resistivity of preferably 500 Ω·cm or less, more preferably 300 Ω·cm or less, further more preferably 200 Ω·cm or less, even more preferably 100 Ω·cm or less, even more preferably 80 Ω·cm or less.

When the volume resistivity of the intermediate layer [I] is in the above-described range, a laminate film comprising an intermediate layer having high conductivity is obtained, and an intermediate layer obtained by peeling and removing the both outer layers from the laminate film can be particularly favorably used in applications of conductive films.

The volume resistivity of the intermediate layer [I] can be determined by the method described in Examples.

### <Both outer layers [II]>

The both outer layers [II] can serve as a protective film which protects a conductive film being the intermediate layer [I] without peeling therefrom until use.

### (Thickness (Y) of Both outer layers [II])

In the laminate film, the both outer layers [II] has a thickness (Y) of preferably than 5 µm and 150 µm or less, more preferably 10 to 150 µm, further more preferably 20 to 130 µm, even more preferably 25 to 100 µm. Here, the thicknesses of the both outer layers [II] may be different, but are preferably the same.

When the thickness of the both outer layers [II] is in the above-described range, the interfaces between the intermediate layer and the both outer layers are formed with stability, the appearance of the intermediate layer is improved, and a laminate film is easily obtained in which peeling of outer layers stabilizes when the outer layers are peeled from the laminate film, and the laminate film has an excellent peeling property between the intermediate layer and both outer layers.

The thickness (Y) of the both outer layers [II] can be determined by the method described in Examples.

### (Resin Composition (B))

The both outer layers [II] are a layer comprising a resin composition (B) containing a thermoplastic resin (b1).

### (Thermoplastic Resin (b1))

The thermoplastic resin (b1) is not limited, and is preferably one or more selected from the group consisting of a polyester-based resin, a polycarbonate-based resin and a polystyrene-based resin from the viewpoint that peeling of outer layers stabilizes when the outer layers are peeled from the laminate film, and the peeling property between the intermediate layer and the both outer layers is improved.

In particular, when a polyolefin-based resin (preferably a polypropylene-based resin) is used as the thermoplastic resin (a1) forming the intermediate layer [I] or at least one surface layer (i-1) thereof, the thermoplastic resin (b1) is preferably one or more selected from a polyester-based resin, a polycarbonate-based resin and a polystyrene-based resin, more preferably a polyester-based resin.

### (Additives)

If necessary, the resin composition (A) may contain additives in addition to the thermoplastic resin (b1) as long as the properties of the both outer layers [II] are not impaired. Examples of the additives include inorganic particles of silica, talc, kaolin, calcium carbonate and the like, pigments such as titanium oxide and carbon black, flame retardants, weathering stabilizers, thermal stabilizers, antistatic agents, melt viscosity modifiers, crosslinkers, lubricants, nucleating agents, plasticizers, anti-aging agents, antioxidants, light stabilizers, ultraviolet absorbers, neutralizers, anti-fogging agents, anti-blocking agents, slipping agents, and colorants.

When additives are used, their content with respect to the resin composition (B) is typically 30% by mass or less, preferably 0.0001 to 20% by mass, more preferably 0.001 to 15% by mass, further more preferably 0.01 to 10% by mass.

### (Layer Structure of Laminate Film)

The laminate film in the present invention is not limited as long as it is formed with the outer layer [II] laminated on both surfaces of the intermediate layer [I], and the laminate film can also be formed by four or more layers with another layer [III] laminated on at least one of the both outer layers [II] as long as the effect of the present invention is not impaired. Specific examples of the other layer [III] include a strength retention layer, a heat-resistant layer, an adhesive layer, and a barrier layer. Examples of the layer structure of the laminate film in the present invention include the configurations shown below.
- Outer layer [II]/intermediate layer [I]/outer layer [II]
- Outer layer [II]/intermediate layer [I]/outer layer [II]/other layer [III]
- Other layer [III]/outer layer [II]/intermediate layer [I]/outer layer [II]/other layer [III]

The laminate film of the present invention preferably has a three-layered configuration in which the outer layer [II] is laminated on both surfaces of the intermediate layer [I]. The total number of layers can be appropriately adjusted according to an application and a use purpose.

### (Thickness of Laminate Film)

The thickness of the laminate film is not limited as long as the thickness (X) of the intermediate layer [I] is 1 µm or more and 100 µm or less, and the ratio of the thickness (Y) of the both outer layers [II] to the thickness (X) of the intermediate layer [I] (Y/X) is 1 or more and 5 or less. The thickness of the laminate film is preferably 20 µm or more and 400 µm or less, more preferably 25 to 400 µm, more preferably 30 to 350 µm, further more preferably 50 to 300 µm.

### [Method for Producing Laminate Film]

The method for producing a laminate film according to the first aspect of the present invention is not limited as long as it is capable of, with respect to an intermediate layer of 1 µm or more and 100 µm or less, setting the ratio of the thickness (X) of the intermediate layer and the thickness (Y) of both outer layers (Y/X) within a specific range (1 or more and 5 or less), setting the thickness variation of the intermediate layer below a specific range (less than ± 10 µm), and setting the peeling strength between the intermediate layer and the both outer layers below a specific range (less than 0.1 N/cm).

Examples of the method for producing a laminate film include a method in which with, for example, an extrusion molding machine equipped with an extruder, a die, a cooling machine, a take-up machine (casting roll) and a cutting machine, an resin composition (A) for intermediate layer and an resin composition (B) for outer layer are respectively put in different hoppers of the extruder, melted and plasticized at a predetermined temperature, co-extruded under predetermined film formation conditions from a lip gap being a discharge outlet of the T-die, guided at a predetermined rate to the casting roll at a predetermined temperature, and then solidified by cooling to obtain a laminate film.

The method for producing a laminate film according to the second aspect of the present invention is not limited as long as it is capable of setting the thickness variation of the intermediate layer below a specific range (less than ± 10 µm).

Examples of the method for producing a laminate film include a method in which with, for example, an extrusion molding machine equipped with an extruder, a die, a cooling machine, a take-up machine (casting roll) and a cutting machine, an resin composition (A) for intermediate layer and an resin composition (B) for outer layer are respectively put in different hoppers of the extruder, melted and plasticized at a predetermined temperature, co-extruded under predetermined film formation conditions from a lip gap being a discharge outlet of the T-die, guided at a predetermined rate to the casting roll at a predetermined temperature, and then solidified by cooling to obtain a laminate film. For lamination of the layers, a multi-manifold die and a feed block can be used.

The method for producing a laminate film according to the third aspect of the present invention is not limited as long as it is capable of providing a layer formed by a plurality of layers as the intermediate layer.

For example, in the case of where the intermediate layer [I] is a layer formed by two layers or three layers, examples for producing a laminate film include a method in which with an extrusion molding machine equipped with an extruder, a die, a cooling machine, a take-up machine (casting roll) and a cutting machine, an intermediate layer resin composition (A1) for forming at least one surface layer (i-1), an intermediate layer resin composition (A2) for forming a middle layer (i-2), and an outer layer resin composition (B) are respectively put in different hoppers of the extruder, melted and plasticized at a predetermined temperature, co-extruded under predetermined film formation conditions from a lip gap being a discharge outlet of the T-die, guided at a predetermined rate to the casting roll at a predetermined temperature, and then solidified by cooling to obtain a laminate film. For lamination of the layers, a multi-manifold die and a feed block can be used.

In the methods for producing a laminate film according to the first and second aspects of the present invention, the ratio of the thickness (x1) of the intermediate layer [I] in a lip portion in co-extrusion and the thickness (X) of the intermediate layer [I] in the laminate film after film formation (x1/X) is 1 to 40, preferably 2 to 35, more preferably 3 to 30, further more preferably 5 to 25, particularly preferably 9 to 20.

In the methods for producing a laminate film according to the second aspect and the third aspect of the present invention, the ratio of the thickness (x1) of the intermediate layer [I] in a lip portion in co-extrusion and the thickness (X) of the intermediate layer [I] in the laminate film after film formation (x1/X) is 0.5 to 40, preferably 1 to 35, more preferably 2 to 30, further more preferably 3 to 25, particularly preferably 9 to 20.

When the thickness ratio (x1/X) is in the above-described range, the interfaces between the intermediate layer formed as a film and both outer layers stabilize, and a laminate film having little thickness variation, a good appearance and an excellent peeling property between the intermediate layer and the both outer layers is easily obtained.

The thickness (x1) of the intermediate layer [I] in the lip portion and the thickness (X) of the intermediate layer [I] in the laminate film after film formation can be appropriately adjusted by film formation conditions such as the extrusion amount and the extrusion rate of the resin composition, the temperature and the take-up speed of the casting roll, the lip gap of the T-die, and the resin temperature in extrusion.

The thickness (x1) of the intermediate layer [I] in the lip portion in co-extrusion is preferably 100 µm or more and 500 µm or less, more preferably 120 to 400 µm, further more preferably 130 to 350 µm, even more preferably 120 to 300 µm.

When the thickness (x1) of the intermediate layer [I] in the lip portion is in the above-described range, handleability during film formation is improved, and the thickness of the intermediate layer [I] in the laminate film after film formation is easily adjusted to be within a specific range (1 to 100 µm).

The thickness (x1) of the intermediate layer [I] in the lip portion is such that a cross-section ratio of the intermediate layer in the lip portion is determined from a ratio of the extrusion amount of the intermediate layer to the extrusion amount of all layers, and from a product of the cross-section ratio and a lip gap, the intermediate layer thickness can be calculated. This can be determined from the equation: thickness (x1) of intermediate layer [I] in lip portion = (extrusion amount of intermediate layer / extrusion amount of all layers) × lip gap.

The thickness (X) of the intermediate layer [I] in the laminate film after film formation according to the first aspect of the present invention is preferably 1 µm or more and 100 µm or less, more preferably 3 to 50 µm, further more preferably 5 to 20 µm, further more preferably 5 to 18 µm, even more preferably 5 to 17 µm.

The thickness (X) of the intermediate layer [I] in the laminate film after film formation according to the second and third aspects of the present invention is preferably 1 µm or more and 200 µm or less, more preferably 3 to 180 µm, further more preferably 5 to 150 µm, even more preferably 5 to 100 µm, even more preferably 5 to 80 µm.

When the thickness (X) of the intermediate layer [I] is in the above-described range, handleability during film formation is improved, mechanical strength as a film is easily obtained, and the laminate film can be particularly favorably used in applications of conductive films where weight reduction and thickness reduction are required.

The thickness (X) of the intermediate layer [I] can be determined by the method described in Examples.

The temperature at which the resin composition (A) for intermediate layer and the resin composition (B) for both outer layers, which are respectively put in different hoppers of the extruder, are melted and plasticized, or the temperature at which the intermediate layer resin composition (A1) for forming at least one surface layer (i-1), the intermediate layer resin composition (A2) for forming the middle layer (i-2), and the resin composition (B) for both outer layers, which are respectively put in different hoppers of the extruder, are melted and plasticized is preferably 190 to 350°C, more preferably 195 to 300°C, further more preferably 200 to 280°C.

When the melting-and-plasticizing temperature is in the above-described range, handleability during film formation is improved, and the flowability and moldability of the resin composition can be improved.

The temperature of the casting roll is preferably 70 to 150°C, more preferably 80 to 140°C, further more preferably 90 to 130°C. The take-up speed of the casting roll is preferably 1.0 to 20 m/min, more preferably 2.0 to 15 m/min, further more preferably 3.0 to 15 m/min. When the temperature and the take-up speed of the casting roll are in the above-described ranges, the thickness of the intermediate layer [I] and the thickness of both outer layers [II] can be each set within a desired range.

### (Processing of Laminate Film)

Stretch processing, and surface processing such as corona treatment, plasma treatment, printing, coating or vapor deposition may be applied to the laminate film of the present invention, for improvement of physical properties such as improvement of mechanical strength or according to an application or a use purpose as long as the effect of the present invention is not impaired.

### [Conductive Film]

The conductive film according to the first aspect of the present invention is obtained by peeling and removing both outer layers of a laminate film. The conductive film may be obtained by peeling and removing both outer layers immediately after production of the laminate film, or may be obtained by peeling and removing both outer layers as necessary after storage in the form of a laminate film. The conductive film is preferably stored in the form of a laminate film from the viewpoint of improving handleability during transportation.

The conductive film according to the second aspect of the present invention is a conductive film comprising a resin composition (A) containing a thermoplastic resin (a1) and a conductive filler (a2). Preferably, the resin composition (A) is a resin composition containing a carboxylic acid-modified polyolefin-based resin (a3), the thickness variation of the conductive film is less than ± 10 µm, and the surface wetting index of at least one surface of the conductive film is 30 dyne/cm or more.

The conductive film according to the third aspect of the present invention is a conductive film comprising a resin composition (A) containing a thermoplastic resin (a1) and a conductive filler (a2). The conductive film is a layer formed by a plurality of layers, and the surface wetting index of at least one surface layer (i-1) of the conductive film is 30 dyne/cm or more.

The conductive film of the present invention is obtained by peeling and removing both outer layers of a laminate film. The conductive film may be obtained by peeling and removing both outer layers immediately after production of the laminate film, or may be obtained by peeling and removing both outer layers as necessary after storage in the form of a laminate film. The conductive film is preferably stored in the form of a laminate film from the viewpoint of improving handleability during transportation.

### [Current Collector and Battery]

The conductive film according to the first aspect of the present invention comprises an intermediate layer (conductive film) having little thickness variation, a good appearance and high conductivity, and thus can also be preferably used for current collectors and batteries (for example, lithium ion batteries).

The conductive film according to the second aspect of the present invention has little thickness variation, excellent coatability with an aqueous liquid, a good appearance and high conductivity, and thus can be preferably used for current collectors and batteries (for example, lithium ion batteries).

The conductive film according to the third aspect of the present invention has excellent coatability with an aqueous liquid, excellent mechanical properties such as tensile elongation at break, little thickness variation, a good appearance and high conductivity, and thus can be preferably used for current collectors and batteries (for example, lithium ion batteries).

### Examples

Hereinafter, the laminate film of the present invention will be described in detail by way of Examples and Comparative Examples, but the present invention is not limited thereto.

### Examples According to First Aspect of Present Invention

### (Examples 1-1 to 1-3)

A resin composition (A) containing 96% by mass of a polypropylene-based resin as a thermoplastic resin (a1) and 4% by mass of carbon nanotubes as a conductive filler (a2), and a resin composition (B) composed of a polyester-based resin (trade name: ECOZEN T110, manufactured by SK Chemicals Co., Ltd.) as a thermoplastic resin (b1) were used.

As a die for an extrusion molding machine, a T-die having a lip gap adjustment mechanism of type adjusting bolt with differential tightening was used, and the lip gap being a discharge outlet of the T-die was set to 0.7 mm.

With an extrusion molding machine equipped with extruders, a die, a cooling machine, a take-up machine (casting roll) and a cutting machine, the resin composition (A) was put in the hopper of an extruder, the resin composition (B) was put in the hopper of another extruder, the temperature of the heater was set to 240°C, the respective resin compositions were melted and plasticized in the extruders, and co-extruded from the lip portion of the T-die under film formation conditions shown in Table 1, and were guided to the casting roll at 100°C, and then solidified by cooling to obtain a laminate film ([II]/[I]/[II]). The outer layers disposed on both surfaces of the intermediate layer had the same thickness.

Further, with respect to the obtained laminate film, both outer layers [II] were peeled and removed by a multiaxial winding slitter to obtain an intermediate layer [I] (conductive film).

The obtained intermediate layer [I] (conductive film) and the both outer layers [II] were evaluated by the methods shown below. Table 1 shows the evaluation results.

### (Examples 1 to 4 and Comparative Examples 1-1 to 1-3)

A resin composition (A) containing 76% by mass of a polypropylene-based resin as a thermoplastic resin (a1) and 24% by mass of carbon black as a conductive filler (a2), and a resin composition (B) composed of a polyester-based resin (trade name: ECOZEN T110, manufactured by SK Chemicals Co., Ltd.) as a thermoplastic resin (b1) were used. Under film formation conditions shown in Table 1, the same procedure as in Example 1-1 was carried out to obtain a laminate film ([II]/[I]/[II]).

### (Peeling Strength Between Intermediate Film and Both outer layers)

A film obtained by peeling and removing only one of both outer layers from the laminate film was cut into a strip shape (width: 25 mm, length: 200 mm) such that the machine direction (MD) of the film matched the long axis. A total of five strip-shaped films were prepared in this manner, and used as an object to be measured.

The outer layer of the strip-shaped film to be measured was peeled in a T-shape by 50 mm in length, the remaining outer layer (150 mm in length) was then peeled in a T-shape under the condition of a peeling rate of 100 mm/min in an environment at a temperature of 25°C, tensile stress was measured, and the maximum value thereof was defined as the peeling strength. An average value of peeling strengths of the total five strip-shaped films was determined, and defined as the peeling strength between the intermediate layer and both outer layers.

In Examples 1-1 to 1-4, T peel test was smooth until the end, whereas in Comparative Examples 1-1 to 1-3, the peeling property in T peel test was lower than that in each of Examples 1-1 to 1-4. In particular, in Comparative Examples 1-1 and 1-2, a stick-slip (getting stuck) occurred in the middle, and a value at this time was recorded aside from the peeling strength between the intermediate layer and the both outer layers.

### (Thickness (X) of Intermediate Layer, Thickness Variation of Intermediate Layer)

An intermediate layer (conductive film) obtained by peeling and removing both outer layers from a laminate film (width: 400 mm, length: 400 mm) was used as an object to measured. Using a 1/1000 mm dial gauge, the thickness was measured at a total of nine positions which are the positions of arbitrary three of center points in a transverse direction (TD) of the film and arbitrary six of positions of 100 mm from center points to the left and the right in the transverse direction, and the average value was defined as the thickness (X) of the intermediate value.

A difference between the value of each thickness of the intermediate layer which had been measured at each of a total of nine positions and the average value of the thicknesses of the intermediate layer which had been measured at a total of nine positions was calculated, and a value obtained by dividing a difference between a maximum value and a minimum value determined by calculation by 2 was defined as the thickness variation.

### (Thickness (Y) of Both outer layers)

Both outer layers peeled and removed from the laminate film were used as an object to be measured. The thickness (Y) of the both outer layers was measured in the same manner as in the case of the thickness (X) of the intermediate layer.

### (Evaluation of Appearance of Conductive Film)

The appearance of the conductive film was visually observed, and evaluated by the following criteria.
- Holes
   A: There are no holes over 1 m in length in the machine direction (MD) of the film.
   B: There are less than 2 holes over 1 m in length in the machine direction (MD) of the film.
   C: There are 2 or more holes over 1 m in length in the machine direction (MD) of the film.
- Flow marks
   A: There are no roughness on the surface of the film.
   B: There are roughness in one of the machine direction (MD) of the film and the transverse direction (TD) of the film (longitudinal streaks are observed).
   C: There are roughness in both of the machine direction (MD) of the film and the transverse direction (TD) of the film.

### (Volume Resistivity of Conductive Film)

The volume resistivity of the conductive film was measured by a four-terminal method according to JIS K7194 using Loresta AP (trade name) (manufactured by Mitsubishi Chemical Corp.) with a sample obtained by cutting the conductive film into 100 mm in length and 100 mm in width.

### [Table 1]

**Table 1**

| | | | | Example 1-1 | Example 1-2 | Example 1-3 | Example 1-4 | Comparative Example 1-1 | Comparative Example 1-2 | Comparative Example 1-3 |
|---|---|---|---|---|---|---|---|---|---|---|
| Intermediate layer | Resin composition (A) | Thermoplastic resin (a1) | [%] | PP (96) | PP (96) | PP (96) | PP (76) | PP (76) | PP (76) | PP (76) |
| | | Conductive filler (a2) | [%] | CNT (4) | CNT (4) | CNT (4) | CB (24) | CB (24) | CB (24) | CB (24) |
| Both outer layers | Resin composition (B) | Thermoplastic resin (b1) | - | PET | PET | PET | PET | PET | PET | PET |
| Film formation condition | Thickness (x1) of intermediate layer [I] in lip portion | | [µm] | 150 | 150 | 300 | 150 | 50 | 400 | 75 |
| | Thickness (y1) of both outer layers [II] in lip portion | | [µm] | 550 | 550 | 400 | 550 | 650 | 300 | 525 |
| | Thickness ratio (x1/X) | | - | 10.0 | 18.8 | 3.2 | 10.0 | 3.3 | 8.0 | 5.0 |
| | Take-up speed of casting roll | | [m/min] | 4.0 | 7.5 | 2.3 | 4.0 | 1.4 | 4.2 | 2.8 |
| Laminate film after film formation | Thickness (X) of intermediate layer [I] | | [µm] | 15 | 8 | 95 | 15 | 15 | 50 | 15 |
| | Thickness (Y) of both outer layers [II] | | [µm] | 53 | 27 | 97 | 53 | 195 | 38 | 110 |
| | Thickness of laminate film ([II]/[I]/[II]) | | [µm] | 121 (53/15/53) | 62 (27/8/27) | 289 (97/95/97) | 121 (53/15/53) | 405 (195/15/195) | 126 (38/50/38) | 235 (110/15/110) |
| | Thickness ratio (Y/X) | | - | 3.5 | 3.4 | 1.0 | 3.5 | 13.0 | 0.8 | 7.3 |
| | Peeling strength between intermediate layer [I] and both outer layers [II] | | [N/cm] | 0.025 | 0.01 | 0.03 | 0.02 | 0.35, 0.8* | 0.42, 1.15* | 0.3 |
| Conductive film | Thickness variation | | [µm] | ±2 | ±2 | ±8 | ±2 | ±10 | ±100 | ±10 |
| | Volume resistivity | | [Ω·cm] | 18.6 | 29.5 | 17.2 | 20.4 | 24.0 | 27.0 | 32.0 |
| | Hole | | - | A | A | A | A | C | A | B |
| | Flow mark | | - | A | A | A | A | B | C | B |

| | | | | | | | | | | |
|---|---|---|---|---|---|---|---|---|---|---|
| "*" indicates a value at stick-slip (getting stuck) | | | | | | | | | | |

From the results shown in Table 1, the following have been confirmed.

The laminate film obtained from each of Examples 1-1 to 1-4 comprises an intermediate layer (conductive film) having little thickness variation, a good appearance and high conductivity, and has an excellent peeling property between the intermediate layer and both outer layers, although the intermediate layer is a film as thin as 100 µm or less.

On the other hand, the laminate film obtained from each of Comparative Examples 1-1 and 1-3 has a thickness ratio (Y/X) of more than 5, comprises an intermediate layer (conductive film) having the same thickness as in Example 1-1, but having a thickness variation larger than that in Example 1-1, a poor appearance with holes and flow marks in the film, and conductivity lower than that in Example 1-1, and is inferior to Examples 1-1 to 1-4 in peeling property between the intermediate layer and both outer layers.

The laminate film obtained from Comparative Example 1-2 has a thickness ratio (Y/X) of less than 1, comprises an intermediate layer (conductive film) having a thickness variation larger than that in Comparative Example 1-1, a poor appearance with, for example, flow marks in the film, and conductivity lower than that in Comparative Example 1-1, and is inferior to Examples 1-1 to 1-4 in peeling property between the intermediate layer and both outer layers.

The laminate film obtained from each of Comparative Examples 1-1 and 1-2 has high peeling strength between the intermediate layer and both outer layers, and a poor appearance with grade C assigned in one of evaluation on holes and evaluation on flow marks with respect to the intermediate layer (conductive film), and suffers from a stick-slip (getting stuck) as peeling of outer layers does not stabilize.

### Examples According to Second Aspect of Present Invention

### (Example 2-1)

A resin composition (A) containing 76% by mass of a polypropylene-based resin as a thermoplastic resin (a1), 4% by mass of carbon nanotubes as a conductive filler (a2), and 20% by mass of a maleic acid-modified polypropylene-based resin ("UMEX 1001" manufactured by Sanyo Chemical Industries, Ltd.; acid value: 26 mg KOH/g) as a carboxylic acid-modified polyolefin-based resin (a3), and a resin composition (B) composed of polyethylene terephthalate (trade name: ECOZEN T110, manufactured by SK Chemicals Co., Ltd.) being a polyester-based resin as a thermoplastic resin (b1) were used.

As a die for an extrusion molding machine, a T-die having a lip gap adjustment mechanism of type adjusting bolt with differential tightening was used, and the lip gap being a discharge outlet of the T-die was set to 0.7 mm. For lamination of the layers, a multi-manifold die and a feed block were used.

With an extrusion molding machine equipped with extruders, a die, a cooling machine, a take-up machine (casting roll) and a cutting machine, the resin composition (A) was put in the hopper of an extruder, the resin composition (B) was put in the hopper of another extruder, the temperature of the heater was set to 240°C, the respective resin compositions were melted and plasticized in the extruders, and co-extruded from the lip portion of the T-die under film formation conditions shown in Table 2, and were guided to the casting roll at 100°C, and then solidified by cooling to obtain a laminate film ([II]/[I]/[II]). The outer layers disposed on both surfaces of the intermediate layer had the same thickness.

Further, with respect to the obtained laminate film, both outer layers [II] were peeled and removed by a multiaxial winding slitter to obtain an intermediate layer [I] (conductive film).

The obtained intermediate layer [I] (conductive film) and the both outer layers [II] were evaluated by the methods shown below. Table 2 shows the evaluation results.

### (Example 2-2)

A resin composition (A) containing 86% by mass of a polypropylene-based resin as a thermoplastic resin (a1), 4% by mass of carbon nanotubes as a conductive filler (a2), and 10% by mass of a maleic acid-modified polypropylene-based resin ("UMEX 1010" manufactured by Sanyo Chemical Industries, Ltd.; acid value: 52 mg KOH/g) as a carboxylic acid-modified polyolefin-based resin (a3), and a resin composition (B) composed of polyethylene terephthalate (trade name: ECOZEN T110, manufactured by SK Chemicals Co., Ltd.) being a polyester-based resin as a thermoplastic resin (b1) were used. Under film formation conditions shown in Table 2, the same procedure as in Example 2-1 was carried out to obtain a laminate film ([II]/[I]/[II]).

### (Reference Example 2-1)

A resin composition (A) containing 96% by mass of a polypropylene resin as a thermoplastic resin (a1) and 4% by mass of carbon black as a conductive filler (a2), and a resin composition (B) composed of polyethylene terephthalate (trade name: ECOZEN T110, manufactured by SK Chemicals Co., Ltd.) being a polyester-based resin as a thermoplastic resin (b1) were used. Under film formation conditions shown in Table 2, the same procedure as in Example 2-1 was carried out to obtain a laminate film ([II]/[I]/[II]).

### (Wetting Index)

An intermediate layer (conductive film) obtained by peeling and removing both outer layers from a laminate film (width: 400 mm, length: 400 mm) was used as an object to be measured. The wetting index of a surface of the conductive film was measured according to JIS K6768: 1999.

### (Evaluation of Coatability)

An intermediate layer (conductive film) obtained by peeling and removing both outer layers from a laminate film (width: 400 mm, length: 400 mm) was used as an object to be measured. A negative electrode aqueous coating material (a negative electrode aqueous coating material obtained by mixing a negative electrode active material, a binder and an aqueous solvent) was applied to the conductive film, and its coated state was visually observed, and evaluated by the following criteria.
A: Poor wetting generated on the surface of the conductive film constitutes less than 10%.
B: Poor wetting generated on the surface of the conductive film constitutes 10% or more and less than 50%.
C: Poor wetting generated on the surface of the conductive film constitutes 50% or more.

### (Thickness (X) of Intermediate Layer, Thickness Variation of Intermediate Layer)

An intermediate layer (conductive film) obtained by peeling and removing both outer layers from a laminate film (width: 400 mm, length: 400 mm) was used as an object to be measured. Using a 1/1000 mm dial gauge, the thickness was measured at a total of nine positions which are the positions of arbitrary three of center points in a transverse direction (TD) of the film and arbitrary six of positions of 100 mm from center points to the left and the right in the transverse direction, and the average value was defined as the thickness (X) of the intermediate layer.

A difference between the value of each thickness of the intermediate layer which had been measured at each of a total of nine positions and the average value of the thicknesses of the intermediate layer which had been measured at a total of nine positions was calculated, and a value obtained by dividing a difference between a maximum value and a minimum value determined by calculation by 2 was defined as the thickness variation.

### (Thickness (Y) of Both outer layers)

Both outer layers peeled and removed from the laminate film were used as an object to be measured. The thickness (Y) of the both outer layers was measured in the same manner as in the case of the thickness (X) of the intermediate layer.

### (Peeling Strength Between Intermediate Film and Both outer layers)

A film obtained by peeling and removing only one of both outer layers from the laminate film was cut into a strip shape (width: 25 mm, length: 200 mm) such that the machine direction (MD) of the film matched the long axis. A total of five strip-shaped films were prepared in this manner, and used as an object to be measured.

The outer layer of the strip-shaped film to be measured was peeled in a T-shape by 50 mm in length, the remaining outer layer (150 mm in length) was then peeled in a T-shape under the condition of a peeling rate of 100 mm/min in an environment at a temperature of 25°C, tensile stress was measured, and the maximum value thereof was defined as the peeling strength. An average value of peeling strengths of the total of five strip-shaped films was determined, and defined as the peeling strength between the intermediate layer and both outer layers.

### (Volume Resistivity of Conductive Film)

The volume resistivity of the conductive film was measured by a four-terminal method according to JIS K7194 using Loresta AP (trade name) (manufactured by Mitsubishi Chemical Corp.) with a sample obtained by cutting the conductive film into 100 mm in length and 100 mm in width. When the volume resistivity of the conductive film was 100 Ω·cm or less, there was no problem in practical use, and grade "A" was assigned.

### (Evaluation of Appearance of Conductive Film)

The appearance of the conductive film was visually observed, and evaluated by the following criteria.
- Holes
   A: There are no holes over 1 m in length in the machine direction (MD) of the film.
   B: There are less than 2 holes over 1 m in length in the machine direction (MD) of the film.
   C: There are 2 or more holes over 1 m in length in the machine direction (MD) of the film.
- Flow marks
   A: There are no roughness on the surface of the film.
   B: There are roughness in one of the machine direction (MD) of the film and the transverse direction (TD) of the film (longitudinal streaks are observed).
   C: There are roughness in both of the machine direction (MD) of the film and the transverse direction (TD) of the film.

**[Table 2]**

| | | | | Example 2-1 | Example 2-2 | Reference Example 2-1 |
|---|---|---|---|---|---|---|
| Intermediate layer [I] | Resin composition (A) | Thermoplastic resin (a1) | [%] | PP (76) | PP (86) | PP (96) |
| | | Conductive filler (a2) | [%] | CNT (4) | CNT (4) | CNT (4) |
| | | Carboxylic acid-modified polyolefin-based resin (a3) | [%] | UMEX 1001 (20) | UMEX 1010 (10) | - |
| Both outer layers [II] | Resin composition (B) | Thermoplastic resin (b1) | - | PET | PET | PET |
| Film formation condition | Thickness (x1) of intermediate layer [I] in lip portion | | [µm] | 150 | 150 | 150 |
| | Thickness (y1) of both outer layers [II] in lip portion | | [µm] | 550 | 550 | 550 |
| | Thickness ratio (x1/X) | | - | 3.0 | 3.0 | 3.0 |
| | Take-up speed of casting roll | | [m/min] | 4.0 | 4.0 | 4.0 |
| Laminate film after film formation | Thickness (X) of intermediate layer [I] | | [µm] | 50 | 50 | 50 |
| | Thickness (Y) of both outer layers [II] | | [µm] | 90 | 89 | 90 |
| | Thickness of laminate film ([II]/[I]/[II]) | | [µm] | 230 (90/50/90) | 228 (89/50/89) | 230 (90/50/90) |
| | Thickness ratio (Y/X) | | - | 1.8 | 1.8 | 1.8 |
| | Peeling strength between intermediate layer [I] and both outer layers [II] | | [N/cm] | 0.025 | 0.02 | 0.023 |
| Conductive film | Wetting index | | [dyne/cm] | 34 | 32 | 29 |
| | Evaluation of coatability | | - | A | A | C |
| | Thickness variation | | [µm] | ±3 | ±3 | ±3 |
| | Volume resistivity | | - | A | A | A |
| | Hole | | - | A | A | A |
| | Flow mark | | - | A | A | A |

From the results shown in Table 2, the following have been confirmed.

The laminate film obtained from each of Examples 2-1 and 2-2 comprises an intermediate layer (conductive film) having a wetting index of 30 dyne/cm or more, and has excellent coatability with an aqueous liquid, little thickness variation, a good appearance and high conductivity with respect to the conductive film, and an excellent peeling property between the intermediate layer and both outer layers.

On the other hand, the laminate film obtained from Reference Example 2-1 comprises an intermediate layer (conductive film) having a wetting index of less than 30 dyne/cm, and is inferior to Examples in coatability with an aqueous liquid with respect to the conductive film.

### Examples According to Third Aspect of Present Invention

### (Example 3-1)

### • Surface Layer (i-1) of Intermediate Layer

A resin composition (A1) containing 76% by mass of a polypropylene-based resin as a thermoplastic resin (a1), 4% by mass of carbon nanotubes as a conductive filler (a2), and 20% by mass of a maleic acid-modified polypropylene-based resin ("UMEX 1001" manufactured by Sanyo Chemical Industries, Ltd.; acid value: 26 mg KOH/g) as a carboxylic acid-modified polyolefin-based resin (a3) was used.

### • Middle Layer (i-2) of Intermediate Layer [I]

A resin composition (A2) containing 96% by mass of a polypropylene-based resin as a thermoplastic resin (a1), and 4% by mass of carbon nanotubes as a conductive filler (a2) was used.

### • Both outer layers [II]

A resin composition (B) composed of polyethylene terephthalate (trade name: ECOZEN T110, manufactured by SK Chemicals Co., Ltd.) being a polyester-based resin as a thermoplastic resin (b1) was used.

As a die for an extrusion molding machine, a T-die having a lip gap adjustment mechanism of type adjusting bolt with differential tightening was used, and the lip gap being a discharge outlet of the T-die was set to 0.7 mm. For lamination of the layers, a multi-manifold die and a feed block were used.

An extrusion molding machine equipped with extruders, a die, a cooling machine, a take-up machine (casting roll) and a cutting machine was used.

The resin composition (A1) was put in the hopper of an extruder, the resin composition (A2) was put in the hopper of another extruder, the resin composition (B) was put in the hopper of another extruder, the temperature of the heater was set to 240°C, the respective resin compositions were melted and plasticized in the extruders, and co-extruded from the lip portion of the T-die under film formation conditions shown in Table 3, and were guided to the casting roll at 100°C, and then solidified by cooling to obtain a laminate film ([II]/[I]/[II]). The surface layers (i-1) disposed on both surfaces of the middle layer (i-2) of the intermediate layer had the same thickness. The outer layers disposed on both surfaces of the intermediate layer had the same thickness.

Further, with respect to the obtained laminate film, both outer layers [II] were peeled and removed by a multiaxial winding slitter to obtain an intermediate layer [I] (conductive film).

The obtained intermediate layer [I] (conductive film) and the both outer layers [II] were evaluated by the methods shown below. Table 3 shows the evaluation results.

### (Example 3-2)

### • Surface Layer (i-1) of Intermediate Layer [I]

A resin composition (A1) containing 86% by mass of a polypropylene-based resin as a thermoplastic resin (a1), 4% by mass of carbon nanotubes as a conductive filler (a2), and 10% by mass of a maleic acid-modified polypropylene-based resin ("UMEX 1010" manufactured by Sanyo Chemical Industries, Ltd.; acid value: 52 mg KOH/g) as a carboxylic acid-modified polyolefin-based resin (a3) was used.

### • Middle Layer (i-2) of Intermediate Layer [I]

A resin composition (A2) containing 76% by mass of a polypropylene-based resin as a thermoplastic resin (a1), and 24% by mass of carbon black as a conductive filler (a2) was used.

### • Both outer layers [II]

A resin composition (B) composed of polyethylene terephthalate (trade name: ECOZEN T110, manufactured by SK Chemicals Co., Ltd.) being a polyester-based resin as a thermoplastic resin (b1) was used.

Using the resin composition (A1) for the surface layer (i-1) of the intermediate layer [I], the resin composition (A2) for the middle layer (i-2) of the intermediate layer [I] and the resin composition (B) for both outer layers [II], the same procedure as in Example 3-1 was carried out under film formation conditions shown in Table 3, thereby obtaining a laminate film ([II]/[I]/[II]).

### (Reference Example 3-1)

### • Intermediate Layer [I]

A resin composition (A1) containing 76% by mass of a polypropylene-based resin as a thermoplastic resin (a1), and 24% by mass of carbon black as a conductive filler (a2) was used.

### • Both outer layers [II]

A resin composition (B) composed of polyethylene terephthalate (trade name: ECOZEN T110, manufactured by SK Chemicals Co., Ltd.) being a polyester-based resin as a thermoplastic resin (b1) was used.

Using the resin composition (A1) for the intermediate layer [I] and the resin composition (B) for both outer layers [II], the same procedure as in Example 3-1 was carried out under film formation conditions shown in Table 3, thereby obtaining a laminate film ([II]/[I]/[II]).

### (Wetting Index)

An intermediate layer (conductive film) obtained by peeling and removing both outer layers from a laminate film (width: 400 mm, length: 400 mm) was used as an object to be measured. The wetting index of a surface of the conductive film was measured according to JIS K6768: 1999.

### (Evaluation of Coatability)

An intermediate layer (conductive film) obtained by peeling and removing both outer layers from a laminate film (width: 400 mm, length: 400 mm) was used as an object to be measured. A negative electrode aqueous coating material (a negative electrode aqueous coating material obtained by mixing a negative electrode active material, a binder and an aqueous solvent) was applied to the conductive film, and its coated state was visually observed, and evaluated by the following criteria.
A: Poor wetting generated on the surface of the conductive film constitutes less than 10%.
B: Poor wetting generated on the surface of the conductive film constitutes 10% or more and less than 50%.
C: Poor wetting generated on the surface of the conductive film constitutes 50% or more.

### (Tensile Elongation at Break)

An intermediate layer (conductive film) obtained by peeling and removing both outer layers from the laminate film (width: 400 mm, length: 400 mm) was cut into a strip shape (width: 15 mm, length: 150 mm) such that the machine direction (MD) of the film matched the long axis. With the thus-obtained test piece, the tensile elongation at break was measured using Autograph AGX-V manufactured by Shimadzu Corporation. Gauge marks with a distance of 50 mm therebetween were placed on the center portion of the test piece. Using a tension tester, a tensile test was conducted at a tension speed of 200 mm/min with a distance of 50 mm between the grip points of the test piece to measure the elongation at break, and the tensile elongation at break in the machine direction (MD) was determined.

### (Thickness (X) of Intermediate Layer, Thickness Variation of Intermediate Layer)

An intermediate layer (conductive film) obtained by peeling and removing both outer layers from a laminate film (width: 400 mm, length: 400 mm) was used as an object to measured. Using a 1/1000 mm dial gauge, the thickness was measured at a total of nine positions which are the positions of arbitrary three of center points in a transverse direction (TD) of the film and arbitrary six of positions of 100 mm from center points to the left and the right in the transverse direction, and the average value was defined as the thickness (X) of the intermediate layer.

A difference between the value of each thickness of the intermediate layer which had been measured at each of a total of nine positions and the average value of the thicknesses of the intermediate layer which had been measured at a total of nine positions was calculated, and a value obtained by dividing a difference between a maximum value and a minimum value determined by calculation by 2 was defined as the thickness variation.

### (Thickness of Surface Layer (i-1) of Intermediate Layer, Thickness of Middle Layer (i-2) of Intermediate Layer)

The intermediate layer was cut in a cross-sectional direction using a microtome, the cross-section was observed with a microscope, and the thickness of the surface layer (i-1) and the thickness of the middle layer (i-2) were measured.

### (Thickness of Both outer layers (Y))

Both outer layers peeled and removed from the laminate film were used as an object to be measured. The thickness (Y) of the both outer layers was measured in the same manner as in the case of the thickness (X) of the intermediate layer.

### (Peeling Strength Between Intermediate Film and Both outer layers)

A film obtained by peeling and removing only one of both outer layers from the laminate film was cut into a strip shape (width: 25 mm, length: 200 mm) such that the machine direction (MD) of the film matched the long axis. A total of five strip-shaped films were prepared in this manner, and used as an object to be measured.

The outer layer of the strip-shaped film to be measured was peeled in a T-shape by 50 mm in length, the remaining outer layer (150 mm in length) was then peeled in a T-shape under the condition of a peeling rate of 100 mm/min in an environment at a temperature of 25°C, tensile stress was measured, and the maximum value thereof was defined as the peeling strength. An average value of peeling strengths of the total of five strip-shaped films was determined, and defined as the peeling strength between the intermediate layer and both outer layers.

### (Volume Resistivity of Conductive Film)

The volume resistivity of the conductive film was measured by a four-terminal method according to JIS K7194 using Loresta AP (trade name) (manufactured by Mitsubishi Chemical Corp.) with a sample obtained by cutting the conductive film into 100 mm in length and 100 mm in width. When the volume resistivity of the conductive film was 100 Ω·cm or less, there was no problem in practical use, and grade "A" was assigned.

### (Evaluation of Appearance of Conductive Film)

The appearance of the conductive film was visually observed, and evaluated by the following criteria.
- Holes
   A: There are no holes over 1 m in length in the machine direction (MD) of the film.
   B: There are less than 2 holes over 1 m in length in the machine direction (MD) of the film.
   C: There are 2 or more holes over 1 m in length in the machine direction (MD) of the film.
- Flow marks
   A: There are no roughness on the surface of the film.
   B: There are roughness in one of the machine direction (MD) of the film and the transverse direction (TD) of the film (longitudinal streaks are observed).
   C: There are roughness in both of the machine direction (MD) of the film and the transverse direction (TD) of the film.

**[Table 3]**

| | | | | Example 3-1 | Example 3-2 | Reference Example 3-1 |
|---|---|---|---|---|---|---|
| Intermediate layer [I] | Surface layer (i-1) Resin composition (A1) | Thermoplastic resin (a1) | [%] | PP (76) | PP (86) | PP (76) |
| | | Conductive filler (a2) | [%] | CNT (4) | CNT (4) | CB (24) |
| | | Carboxylic acid-modified polvolefin-based resin (a3) | [%] | UMEX 1001 (20) | UMEX 1010 (10) | - |
| | Middle layer (i-2) Resin composition (A2) | Thermoplastic resin (a1) | [%] | PP (96) | PP (76) | - |
| | | Conductive filler (a2) | [%] | CNT (4) | CB (24) | - |
| Both outer lavers [II] | Resin composition (B) | Thermoplastic resin (b1) | - | PET | PET | PET |
| Film formation condition | Thickness (x1) of intermediate layer [I] in lip portion | | [µm] | 150 | 150 | 150 |
| | Thickness of surface layer (i-1) of intermediate layer [I] in lip portion | | [µm] | 45 | 45 | - |
| | Thickness of middle layer (i-2) of intermediate layer [I] in lip portion | | [µm] | 60 | 60 | - |
| | Thickness (y1) of both outer layers [II] in lip portion | | [µm] | 550 | 550 | 550 |
| | Thickness ratio (xl/X) | | - | 3.0 | 3.0 | 3.0 |
| | Take-up speed of casting roll | | [m/min] | 4.0 | 4.0 | 4.0 |
| Laminate film after film formation | Thickness (X) of intermediate layer [I] (surface layer (i-1)/middle layer (i-2)/surface layer (i-1)) | | [µm] | 50 (15/20/15) | 50 (15/20/15) | 50 (-) |
| | Thickness (Y) of both outer layers [II] | | [µm] | 90 | 91 | 90 |
| | Thickness of laminate film ([II]/[I]/[II]) | | [µm] | 230 (90/50/90) | 232 (91/50/91) | 230 (90/50/90) |
| | Thickness ratio (Y/X) | | - | 1.8 | 1.8 | 1.8 |
| | Peeling strength between intermediate layer [I] and both outer lavers [II] | | [N/cm] | 0.025 | 0.031 | 0.023 |
| Conductive film | Wetting index | | [dyne/cm] | 34 | 34 | 29 |
| | Evaluation of coatability | | - | A | A | C |
| | Tensile elongation at break in machine direction (MD) | | % | 389.2 | 125.3 | 11.2 |
| | Thickness variation | | [µm] | ±3 | ±3 | ±3 |
| | Volume resistivity | | - | A | A | A |
| | Hole | | - | A | A | A |
| | Flow mark | | - | A | A | A |

From the results shown in Table 3, the following were confirmed.

The laminate film obtained from each of Examples 3-1 and 3-2 comprises an intermediate layer (conductive film) having a wetting index of 30 dyne/cm or more, and has excellent coatability with an aqueous liquid, excellent mechanical properties such as tensile elongation at break, little thickness variation, a good appearance and high conductivity with respect to the conductive film, and an excellent peeling property between the intermediate layer and both outer layers.

On the other hand, the laminate film obtained from Reference Example 3-1 comprises an intermediate layer (conductive film) having a wetting index of less than 30 dyne/cm, and is inferior to examples in coatability with an aqueous liquid and mechanical properties such as tensile elongation at break with respect to the conductive film.

### Industrial Applicability

The conductive film according to the first aspect of the present invention enables provision of a laminate film comprising an intermediate layer having little thickness variation, a good appearance and high conductivity, and having an excellent peeling property between the intermediate layer and both outer layers, although the intermediate layer is a film as thin as 100 µm or less. According to the first aspect of the present invention, an intermediate layer obtained by peeling and removing the both outer layers from the laminate film can be particularly favorably used in applications of conductive films.

According to the second aspect of the present invention, there can be provided a laminate film comprising an intermediate layer having little thickness variation, excellent coatability with an aqueous liquid, a good appearance and high conductivity, and having an excellent peeling property between the intermediate layer and both outer layers. According to the second aspect of the present invention, there can be provided a conductive film having little thickness variation, excellent coatability with an aqueous liquid, a good appearance and high conductivity.

According to the third aspect of the present invention, there can be provided a laminate film comprising an intermediate layer having excellent coatability with an aqueous liquid, excellent mechanical properties such as tensile elongation at break, little thickness variation, a good appearance and high conductivity, and having an excellent peeling property between the intermediate layer and both outer layers. According to the third aspect of the present invention, there can be provided a conductive film having excellent coatability with an aqueous liquid, excellent mechanical properties such as tensile elongation at break, little thickness variation, a good appearance and high conductivity.

## Claims

1. A laminate film comprising an intermediate layer [I] comprising a resin composition (A) containing a thermoplastic resin (a1) and a conductive filler (a2), and both outer layers [II] comprising a resin composition (B) containing a thermoplastic resin (b1),
wherein a thickness (X) of the intermediate layer [I] is 1 µm or more and 100 µm or less,
a ratio of a thickness (Y) of the both outer layers [II] to the thickness (X) of the intermediate layer [I] (Y/X) is 1 or more and 5 or less,
a thickness variation of the intermediate layer [I] is less than ±10 µm, and
a peeling strength between the intermediate layer [I] and the both outer layers [II] is less than 0.1 N/cm.

2. The laminate film according to claim 1, wherein the thermoplastic resin (a1) is a polyolefin-based resin.

3. The laminate film according to claim 1 or 2, wherein the conductive filler (a2) is at least one selected from the group consisting of a carbon nanotube and carbon black.

4. The laminate film according to claim 1 or 2, wherein the thermoplastic resin (b1) is one or more selected from the group consisting of a polyester-based resin, a polycarbonate-based resin and a polystyrene-based resin.

5. The laminate film according to claim 1 or 2, wherein a content of the conductive filler (a2) is 0.1% by mass or more and 50% by mass or less with respect to the resin composition (A).

6. A method for producing the laminate film according to claim 1 or 2, comprising
co-extruding a resin composition (A) containing a thermoplastic resin (a1) and a conductive filler (a2) and a resin composition (B) containing a thermoplastic resin (bl) for film formation,
wherein a ratio of a thickness (x1) of the intermediate layer [I] in a lip portion in the co-extrusion and the thickness (X) of the intermediate layer [I] in the laminate film after the film formation (x1/X) is 1 to 40.

7. The method for producing a laminate film according to claim 6, wherein the thickness (x1) of the intermediate layer [I] in the lip portion in the co-extrusion is 40 µm or more and 500 µm or less.

8. The method for producing a laminate film according to claim 6, wherein the thickness (X) of the intermediate layer [I] in the laminate film after the film formation is 1 µm or more and 100 µm or less.

9. A laminate film comprising an intermediate layer [I] comprising a resin composition (A) containing a thermoplastic resin (a1) and a conductive filler (a2), and both outer layers [II] comprising a resin composition (B) containing a thermoplastic resin (b1),
wherein a thickness variation of the intermediate layer [I] is less than ±10 µm, and
a surface wetting index of at least one surface of the intermediate layer [I] is 30 dyne/cm or more.

10. The laminate film according to claim 9, wherein the resin composition (A) comprises a carboxylic acid-modified polyolefin-based resin (a3).

11. The laminate film according to claim 10, wherein a content of the carboxylic acid-modified polyolefin-based resin (a3) is 5% by mass or more and 50% by mass or less with respect to the resin composition (A).

12. A laminate film comprising an intermediate layer [I] comprising a resin composition (A) containing a thermoplastic resin (a1) and a conductive filler (a2), and both outer layers [II] comprising a resin composition (B) containing a thermoplastic resin (b1),
wherein the intermediate layer [I] is a layer formed by a plurality of layers, and
a surface wetting index of at least one surface layer (i-1) of the intermediate layer [I] is 30 dyne/cm or more.

13. The laminate film according to claim 12, wherein at least one surface layer (i-1) of the intermediate layer [I] is a layer formed of a resin composition (A1) containing a thermoplastic resin (a1), a conductive filler (a2) and a carboxylic acid-modified polyolefin-based resin (a3).

14. The laminate film according to claim 13, wherein a content of the carboxylic acid-modified polyolefin-based resin (a3) is 5% by mass or more and 50% by mass or less with respect to the resin composition (A1).

15. The laminate film according to claim 12 or 13, wherein the intermediate layer [I] has two layers which are a surface layer (i-1) and a middle layer (i-2) in this order, or three layers which are a surface layer (i-1), a middle layer (i-2) and a surface layer (i-1) in this order.

16. The laminate film according to claim 15, wherein the middle layer (i-2) of the intermediate layer [I] is a layer formed of a resin composition (A2) which contains the thermoplastic resin (a1) and the conductive filler (a2), and is substantially free of the carboxylic acid-modified polyolefin-based resin (a3).

17. The laminate film according to claim 12 or 13, wherein a thickness variation of the intermediate layer [I] is less than ±10 µm.

18. The laminate film according to claim 9 or 12, wherein a thickness (X) of the intermediate layer [I] is 1 µm or more and 100 µm or less, and a ratio of a thickness (Y) of each of the both outer layers [II] to the thickness (X) of the intermediate layer [I] (Y/X) is 1 or more and 5 or less.

19. The laminate film according to claim 9 or 12, wherein a peeling strength between the intermediate layer [I] and the both outer layers [II] is less than 0.1 N/cm.

20. The laminate film according to claim 9 or 12, wherein the thermoplastic resin (a1) is a polyolefin-based resin.

21. The laminate film according to claim 9 or 12, wherein the conductive filler (a2) is carbon nanotubes.

22. The laminate film according to claim 9 or 12, wherein the thermoplastic resin (bl) is a polyester-based resin.

23. The laminate film according to claim 9 or 12, wherein a content of the conductive filler (a2) is 0.1% by mass or more and 50% by mass or less with respect to the resin composition (A).

24. The laminate film according to claim 1, 9 or 12, wherein a thickness of the laminate film is 20 µm or more and 400 µm or less.

25. The laminate film according to claim 1, 9 or 12, wherein the thickness of each of the both outer layers [II] is 5 µm or more and 150 µm or less.

26. A conductive film obtained by peeling and removing the both outer layers [II] from the laminate film according to claim 1, 9 or 12.

27. A current collector comprising the conductive film according to claim 26.

28. A battery comprising the conductive film according to claim 26.

29. A laminate film comprising an intermediate layer [I] comprising a resin composition (A) containing a thermoplastic resin (a1) and a conductive filler (a2), both outer layers [II] comprising a resin composition (B) containing a thermoplastic resin (b1),
wherein the resin composition (A) comprises a carboxylic acid-modified polyolefin-based resin (a3).
